# EUROPEAN PATENT APPLICATION

(11) **EP 3 673 980 A1**
(43) Date of publication of application: **01.07.2020**
(21) Application number: 18848985.0
(22) Date of filing: 21.08.2018
(51) Int. Cl.: B01D 63/10

(54) **MEMBRANE ELEMENT AND FILTER CARTRIDGE**

(30) Priority: 21.08.2017 CN 201710719677; 21.08.2017 CN 201721047971 U; 21.08.2017 CN 201721047437 U; 01.12.2017 CN 201721647839 U
(71) Applicant: A.O. Smith Corporation, Milwaukee, WI 53224 (US)
(72) Inventor: SHEN, Ke, Nanjing Jiangsu 211200 (CN); HOU, Yizhi, Nanjing Jiangsu 211200 (CN); WANG, Chen, Nanjing Jiangsu 211200 (CN)
(74) Representative: Dauncey, Mark Peter
(86) International application number: PCT/CN2018/101508
(87) International publication number: WO 2019/037713

(57) **Abstract**

Disclosed in the present application are a membrane element and a filter cartridge. The membrane element comprises: a water collecting tube; and a first membrane unit and a second membrane unit wound on the water collecting tube together. A waste water outlet of the first membrane unit is in communication with a raw water inlet of the second membrane unit. When the first membrane unit and the second membrane unit are expanded, the waste water outlet of the first membrane unit and the raw water inlet of the second membrane unit are located on the same side. The first membrane unit and the second membrane unit may be wound on the water collecting tube together in one step. In this implementation, according to the membrane element in embodiments of the present application, the surface flow rate of the membrane element can be improved, the anti-contamination performance of the membrane can be enhanced, the service life of the membrane can be prolonged, and the pure water yield of the membrane element under the same water inlet pressure remains unchanged. In addition, the method for preparing the membrane element in the embodiments of the present application is simple. The membrane element in the embodiments of the present application has a small size.

## Description

### Cross-reference to Related Application

This application claims the benefit of Chinese Patent Application Numbers 201721047971.7, 201710719677.4, and 201721047437.6 titled "Membrane element and filter cartridge" and filed on August 21, 2017, as well as of Chinese Patent Application Number 201721647839.X titled "Membrane element and filter cartridge" and filed on December 1, 2017, the entire contents of which are incorporated by reference herein.

### Technical Field

The present application relates to the field of water treatment, in particular to a membrane element and a filter cartridge.

### Background Art

In the prior art, a wound membrane element is often used for filtering water. A raw water flow passage is formed on a front interlayer of a membrane element, and a pure water flow passage is formed on a rear interlayer of the membrane element.

Generally, with the same surface area, the longer a membrane leaf is, the longer a raw water flow passage is; the smaller the number of membrane leaves is, the higher the surface flow rate is. A membrane element having a higher surface flow rate possesses greater strength to remove a pollutant that has adhered to a membrane surface, thus delivering higher anti-contamination performance and having a longer service life. In a conventional membrane element, a raw water flow passage has a length corresponding to that of a pure water flow passage; when a raw water flow passage of a single membrane element is too long, the corresponding pure water flow passage is also too long; consequently, the back pressure on the pure water side of the membrane element is high, leading to a decrease in the pure water yield of the membrane under the same water inlet pressure.

In addition, how to make a membrane element small or develop a simple method for manufacturing a membrane element are also technical problems that those of ordinary skill in the art urgently need to solve.

### Summary of the Invention

In order to overcome the above-mentioned shortcomings in the prior art, a technical problem to be solved by the present application is providing a membrane element and a filter cartridge that may solve at least one of the above-mentioned technical problems.

A specific technical solution of the present application is:
a membrane element, comprising:
a water collecting tube;
and a first membrane unit and a second membrane unit that are wound on said water collecting tube together;
a waste water outlet of said first membrane unit being in communication with a raw water inlet of said second membrane unit; when said first membrane unit and said second membrane unit are expanded, said waste water outlet of said first membrane unit and said raw water inlet of said second membrane unit are located on the same side.

Preferably, said first membrane unit and said second membrane unit are wound on said water collecting tube together in one step.

Preferably, said first membrane unit and said second membrane unit are stacked when said membrane element is expanded.

Preferably, said membrane element, when expanded, is provided with a first side that is connected to said water collecting tube and a second side that faces said first side; the waste water outlet of said first membrane unit and the raw water inlet of said second membrane unit, when said membrane element is expanded, are located on said second side.

Preferably, said membrane element, when expanded, is provided with a third side and a fourth side that face each other, said third side and said fourth side are connected to said first side and said second side, respectively, the raw water inlet of said first membrane unit is disposed on said third side that is close to said first side, and the waste water outlet of said second membrane unit is disposed on said fourth side that is close to said first side.

Preferably, the part of the third side on the side of the raw water flow passage of said first membrane unit except the raw water inlet of said first membrane unit is sealed, and the fourth side on the side of the raw water flow passage of said first membrane unit is sealed; the part of the fourth side on the side of the raw water flow passage of said second membrane unit except the waste water outlet of said second membrane unit is sealed, and the third side on the side of the raw water flow passage of said second membrane unit is sealed.

Preferably, the third side on the side of the raw water flow passage of said first membrane unit, except the part corresponding to the raw water inlet of said first membrane unit, and the third side on the side of the raw water flow passage of said second membrane unit, except the part corresponding to the raw water inlet of said first membrane unit, are sealed by a first end cover, and a part of the third side of said second membrane unit corresponding to the raw water inlet of said first membrane unit is sealed on the surface of said second membrane unit that is close to the third side and on the side of the raw water flow passage.

Preferably, the fourth side on the side of the raw water flow passage of said second membrane unit, except the part corresponding to the waste water outlet of said second membrane unit, and the fourth side on the side of the raw water flow passage of said first membrane unit, except the part corresponding to the waste water outlet of said second membrane unit, are sealed by a second end cover, and a part of the fourth side of said first membrane unit corresponding to the waste water outlet of said second membrane unit is sealed on the surface of said first membrane unit that is close to the fourth side and on the side of the raw water flow passage.

Preferably, the waste water outlet of said first membrane unit and the raw water inlet of said second membrane unit are located at one end of said membrane element, and the raw water inlet of said first membrane unit and the waste water outlet of said second membrane unit are located at the other end of said membrane element. Preferably, said membrane element, when expanded, is provided with a first side that is connected to said water collecting tube and a second side that faces said first side, said membrane element, when expanded, is further provided with a third side and a fourth side that face each other, said third side and said fourth side are connected to said first side and said second side, respectively, the waste water outlet of said first membrane unit is disposed on said fourth side that is close to said second side, the raw water inlet of said second membrane unit is disposed on said fourth side that is close to said first side, the raw water inlet of said first membrane unit is disposed on said third side that is close to said first side, and the waste water outlet of said second membrane unit is disposed on said third side that is close to said second side.

Preferably, the part of the third side on the side of the raw water flow passage of said first membrane unit except the raw water inlet of said first membrane unit is sealed, and the part of the fourth side on the side of the raw water flow passage of said first membrane unit except the waste water outlet of said first membrane unit is sealed; the part of the fourth side on the side of the raw water flow passage of said second membrane unit except the raw water inlet of said second membrane unit is sealed, the part of the third side on the side of the raw water flow passage of said second membrane unit except the waste water outlet of said second membrane unit is sealed, and the second side of said membrane element is sealed.

Preferably, the third side on the side of the raw water flow passage of said first membrane unit except the part corresponding to the raw water inlet of said first membrane unit and the waste water outlet of said second membrane unit, and the third side on the side of the raw water flow passage of said second membrane unit except the part corresponding to the raw water inlet of said first membrane unit and the waste water outlet of said second membrane unit are sealed by an end cover; a part of the third side of said first membrane unit corresponding to the waste water outlet of said second membrane unit is sealed on the surface of said first membrane unit that is close to the third side and on the side of the raw water flow passage; a part of the third side of said second membrane unit corresponding to the raw water inlet of said first membrane unit is sealed on the surface of said second membrane unit that is close to the third side and on the side of the raw water flow passage.

Preferably, the fourth side on the side of the raw water flow passage of said first membrane unit except the part corresponding to the waste water outlet of said first membrane unit and the raw water inlet of said second membrane unit, and the fourth side on the side of the raw water flow passage of said second membrane unit except the part corresponding to the waste water outlet of said first membrane unit and the raw water inlet of said second membrane unit are sealed by an end cover; a part of the fourth side of said first membrane unit corresponding to the raw water inlet of said second membrane unit is sealed on the surface of said first membrane unit that is close to the fourth side and on the side of the raw water flow passage; a part of the fourth side of said second membrane unit corresponding to the waste water outlet of said first membrane unit is sealed on the surface of said second membrane unit that is close to the fourth side and on the side of the raw water flow passage.

Preferably, said membrane element further comprises a first end cover and a second end cover that are disposed on either end of said water collecting tube, said first end cover being provided with a first opening that is in communication with the raw water inlet of said first membrane unit and a second opening that is in communication with the waste water outlet of said second membrane unit, said second end cover being provided with a third through hole that is in communication with the waste water outlet of said first membrane unit and a fourth through hole that is in communication with the raw water inlet of said second membrane unit.

Preferably, said first membrane unit and said second membrane unit are configured in parallel in an axial direction of said water collecting tube, and said membrane element, when expanded, is provided with a first side that is connected to said water collecting tube and a second side that faces said first side; the waste water outlet of said first membrane unit and the raw water inlet of said second membrane unit, when said membrane element is expanded, are located on said second side, said membrane element, when expanded, is provided with a third side and a fourth side that face each other, said third side and said fourth side are connected to said first side and said second side, respectively, the raw water inlet of said first membrane unit is disposed on said third side that is close to said first side, and the waste water outlet of said second membrane unit is disposed on said fourth side that is close to said first side.

Preferably, said first membrane unit is provided with a first end and a second end that face each other in an axial direction of said water collecting tube, and said second membrane unit is provided with a third end and a fourth end that face each other in an axial direction of said water collecting tube, wherein the second end of said first membrane unit and the third end of said second membrane unit are disposed facing each other,
said membrane element comprises a first end cover, a second end cover, a third end cover, and fourth end cover, said first end cover, second end cover, third end cover and fourth end cover being correspondingly disposed at the first end and second end of said first membrane unit and disposed at the third end and fourth end of said second membrane unit;
the part of the third side on the side of the raw water flow passage of said first membrane unit except the raw water inlet of said first membrane unit is sealed by the first end cover;
the fourth side on the side of the raw water flow passage of said first membrane unit is sealed by the second end cover;
the third side on the side of the raw water flow passage of said second membrane unit is sealed by the third end cover;
the part of the fourth side on the side of the raw water flow passage of said second membrane unit except the waste water outlet of said second membrane unit is sealed by the fourth end cover.

Preferably, said membrane element, when expanded, is provided with a first side that is connected to said water collecting tube and a second side that faces said first side; the waste water outlet of said first membrane unit and the raw water inlet of said second membrane unit, when said membrane element is expanded, are located on said second side, said membrane element comprises a membrane shell, and a third space is formed between said membrane shell and an outer wall of said first membrane unit and/or said second membrane unit.

Preferably, said first membrane unit and said second membrane unit are made of the same or different filter membrane materials.

Preferably, said first membrane unit is a nanofiltration membrane, and said second membrane unit is a reverse osmosis membrane.

Preferably, said first membrane unit has a surface area smaller than that of said second membrane unit.

Preferably, said first membrane unit and said second membrane unit are reverse osmosis membranes.

Preferably, said first membrane unit has a surface area larger than that of said second membrane unit.

Preferably, a plurality of first membrane units are provided, and said plurality of first membrane units are made of the same or different filter membrane materials.

Preferably, a plurality of second membrane units are provided, and said plurality of second membrane units are made of the same or different filter membrane materials.

Preferably, the raw water flow passage of said first membrane unit and that of said second membrane unit extend spirally in a circumferential direction of said water collecting tube.

The present application further discloses a membrane element, comprising: at least one water collecting tube, a first membrane unit wound on said water collecting tube, and a second membrane unit wound on said water collecting tube, wherein at least one of the raw water flow passage of said first membrane unit and that of said second membrane unit extends spirally in a circumferential direction of said water collecting tube, and the waste water outlet of said first membrane unit is in communication with the raw water inlet of said second membrane unit.

Embodiments of the present application further disclose a filter cartridge that comprises the above-described membrane element.

In this implementation, the pure water flow passage of a membrane element in embodiments of the present application remains unchanged, and therefore the back pressure of pure water remains unchanged; however, by methods such as connecting surfaces in series, the number of raw water inlet leaves is decreased and the raw water flow passage is lengthened; thus, the surface flow rate of the membrane element can be improved, the anti-contamination performance of the membrane can be enhanced, the service life of the membrane can be prolonged, and the pure water yield of the membrane element under the same water inlet pressure remains unchanged. In addition, the method for preparing the membrane element in the embodiments of the present application is simple. The membrane element in the embodiments of the present application has a small size.

### Brief Description of the Drawings

The drawings described herein only serve explanatory purposes, instead of being intended to limit in any way the scope disclosed by the present application. In addition, the shapes and proportions of the components shown in the drawings are only schematic and intended to help understand the present application, instead of specifically limiting the shapes or proportions of the components of the present application. Taught by the present application, those of ordinary skill in the art may, based on specific conditions, select various possible shapes and proportions for implementing the present application.
Figure 1 shows a structural diagram for a membrane element that is expanded in an embodiment of the present application;
Figure 2 shows a front view of a membrane element that is expanded in a specific embodiment shown in Figure 1;
Figure 3 shows a front view of a membrane element that is expanded in another specific embodiment shown in Figure 1;
Figure 4 shows a schematic diagram for a flow passage of the membrane element shown in Figure 2;
Figure 5 shows a schematic diagram for the membrane element shown in Figure 1 that is expanded;
Figure 6 shows a structural diagram for a membrane element that is structurally similar to the membrane element shown in Figure 1, said membrane element being provided with a membrane shell;
Figure 7 shows a structural diagram for a membrane element in another embodiment of the present application;
Figure 8 shows a schematic diagram for a fluid of the membrane element shown in Figure 7;
Figure 9 shows a structural diagram for a membrane element that is structurally similar to the membrane element shown in Figure 1, said membrane element being provided with a membrane shell;
Figure 10 shows a structural diagram for a membrane element that is expanded in another embodiment of the present application;
Figure 11 shows a front view of a membrane element that is expanded in a specific embodiment shown in Figure 10;
Figure 12 shows a front view of a membrane element that is expanded in another specific embodiment shown in Figure 10;
Figure 13 shows a specific structural diagram for the membrane element shown in Figure 10;
Figure 14 shows a schematic diagram for a flow passage of the membrane element shown in Figure 10;
Figure 15 shows a structural diagram for a membrane element in another embodiment of the present application;
Figure 16 shows a schematic diagram for a flow passage of the membrane element shown in Figure 15;
Figure 17 shows a specific structural diagram for a second central tube shown in Figure 15;
Figure 18 shows a sectional view of Figure 17;
Figure 19 shows a specific structural diagram for a second central tube shown in Figure 15;
Figure 20 shows a sectional view of Figure 19;
Figure 21 shows a structural diagram for the lower part of the membrane element shown in Figure 15;
Figure 22 shows a structural diagram for the upper part of the membrane element shown in Figure 15;
Figure 23 shows a structural diagram for a membrane element in another embodiment of the present application;
Figure 24 shows a structural diagram for the lower part of the membrane element shown in Figure 23;
Figure 25 shows a structural diagram for the upper part of the membrane element shown in Figure 23;
Figure 26 shows a structural diagram for a membrane element in another embodiment of the present application;
Figure 27 shows a schematic diagram for a flow passage of the membrane element shown in Figure 26;
Figure 28 shows a structural diagram for a membrane element in another embodiment of the present application;
Figure 29 shows a structural diagram for a membrane element in another embodiment of the present application; and
Figure 30 shows a structural diagram for a membrane element in another embodiment of the present application.

Reference numerals in the above drawings: 1. Water collecting tube; 11. First central tube; 12. Second central tube; 111. First pure water guide passage; 112. Second pure water guide passage; 113. First passage; 114. Second passage; 15. Penetrating hole; 2. First membrane unit; 21. Raw water inlet of the first membrane unit; 22. Waste water outlet of the first membrane unit; 3. Second membrane unit; 31. Raw water inlet of the second membrane unit; 32. Waste water outlet of the second membrane unit; 5. Membrane shell; 61. First through hole; 62. Second through hole; 63. Interlayer; 65. First gap space; 66. Second gap space; 71. First side; 72. Second side; 73. Third side; 74. Fourth side; 81. First end cover; 82. Second end cover; 83. Third end cover; 84. Fourth end cover; 91. First cover body; 92. Second cover body; 93. Third cover body; 94. Fourth cover body; 95. Fifth cover body; 96. First space; 97. Second space; 98. Fifth through hole; 981. Third through hole; 982. Fourth through hole; 99. Fourth passage; 101. First water tube; 102. Second water tube.

### Specific Embodiments

Details about the present application may be understood more clearly in conjunction with the drawings and a description of specific embodiments of the present application. However, specific embodiments of the present application described herein are intended to only explain objectives of the present application, and should not be construed in any way as limiting the present application. Taught by the present application, those of ordinary skill in the art may conceive of any possible variants based on the present application, all of which should be deemed to fall within the scope of the present application.

An embodiment of the present application discloses a membrane element, comprising: at least one water collecting tube 1, and a first membrane unit 2 and a second membrane unit 3 that are wound on said water collecting tube 1 together.

An embodiment of the present application discloses a membrane element, comprising: at least one water collecting tube 1, a first membrane unit 2 wound on said water collecting tube 1, and a second membrane unit 3 wound on said water collecting tube 1.

The raw water flow passage of said first membrane unit 2 and that of said second membrane unit 3 extend spirally in a circumferential direction of said water collecting tube 1.

At least one of the raw water flow passage of said first membrane unit 2 and that of said second membrane unit 3 extends spirally in a circumferential direction of said water collecting tube 1.

A waste water outlet 22 of said first membrane unit is in communication with a raw water inlet 31 of said second membrane unit; when said first membrane unit 2 and said second membrane unit 3 are expanded, the waste water outlet 22 of said first membrane unit and the raw water inlet 31 of said second membrane unit are located on the same side.

When said first membrane unit 2 and said second membrane unit 3 are expanded, said first membrane unit 2 and said second membrane unit 3 may be stacked.

Said first membrane unit 2 and said second membrane unit 3 may also be configured in parallel in an axial direction of said water collecting tube 1.

The waste water outlet 22 of said first membrane unit may be located on a circumferential surface of said membrane element, and the raw water inlet 31 of said second membrane unit may be located on a circumferential surface of said membrane element.

The waste water outlet 22 of said first membrane unit and the raw water inlet 31 of said second membrane unit may be located in an end portion of at least one end of said membrane element.

Said first membrane unit 2 and said second membrane unit 3 may be wound on said water collecting tube 1 together.

Said first membrane unit 2 and said second membrane unit 3 may be wound on said water collecting tube 1 together in one step.

In order to further lengthen the raw water flow passage of the membrane element, in an embodiment of the present application, the waste water outlet 22 of the first membrane unit is in communication with the raw water inlet 31 of the second membrane unit. In an embodiment of the present application, the pure water flow passage remains unchanged as the raw water flow passage is lengthened, and therefore the back pressure of pure water remains unchanged; however, by methods such as connecting surfaces in series, the number of raw water inlet leaves is decreased and the raw water flow passage is lengthened; thus, the surface flow rate of the membrane element can be improved, the anti-contamination performance of the membrane can be enhanced, the service life of the membrane can be prolonged, and the pure water yield of the membrane element under the same water inlet pressure remains unchanged.

In an embodiment of the present application, the waste water outlet of said first membrane unit and the raw water inlet of said second membrane unit are located on the same side, which provides convenience of processing, manufacture, and assembly, and allows a membrane element that has such a structure to have a small size.

In addition, in an embodiment of the present application, the first membrane unit 2 and the second membrane unit 3 are wound on a water collecting tube together, which keeps the size of the membrane element small. Moreover, in an embodiment of the present application, the first membrane unit 2 and the second membrane unit 3 may be wound on a water collecting tube 1 together in one step, which makes it easy to manufacture the membrane element and reduces the number of processing steps.

Further, in the prior art, the raw water flow passage of a membrane unit generally leads into the membrane unit from one end and leads out of the membrane unit from the other end. In contrast, in an embodiment of the present application, at least one of the raw water flow passage of said first membrane unit 2 and that of said second membrane unit 3 extends spirally in a circumferential direction of said water collecting tube 1. Since said first membrane unit 2 and/or second membrane unit 3 are or is wound on said water collecting tube 1, a membrane unit having such a structure has a long raw water flow passage.

However, the raw water flow passages of said first membrane unit 2 and/or second membrane unit 3 having such a structure cannot be extended infinitely. When the raw water flow passage is lengthened, as the raw water flow passage extends spirally in a circumferential direction of the water collecting tube 1, the pure water flow passage of the membrane unit is lengthened accordingly; in this case, the back pressure of the membrane unit is high, which usually leads to a decrease in the pure water yield of the membrane unit.

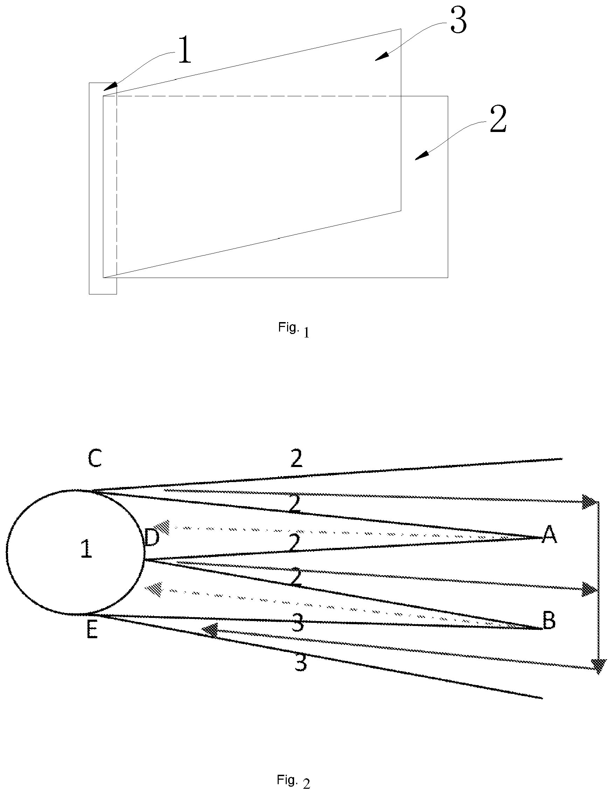

Figures 1 to 5 show a specific embodiment of a membrane element in the present application. As shown in Figure 1, the membrane element in the embodiment comprises a water collecting tube 1, a first membrane unit 2, and a second membrane unit 3. Said first membrane unit 2 and said second membrane unit 3 are wound on said water collecting tube 1 together in one step.

When said membrane element is expanded, said first membrane unit 2 and said second membrane unit 3 are stacked. For example, as shown in Figures 2, 3, and 4, a raw water flow passage is formed between the front surfaces of adjacent first membrane units 2. A raw water flow passage is also formed between the front surfaces of adjacent second membrane units 3. The rear surface of said first membrane unit 2 and the rear surface of said second membrane unit 3 are pure water flow passages and all lead to said water collecting tube 1. The raw water flow passage of said first membrane unit 2 flows in a direction away from said water collecting tube 1, and the raw water flow passage of said second membrane unit 3 flows in a direction facing said water collecting tube 1.

The membrane materials of said first membrane unit 2 and said second membrane unit 3 may be the same or different. The membrane materials between said first membrane units 2 may also be the same or different. The membrane materials between said second membrane units 3 may also be the same or different.

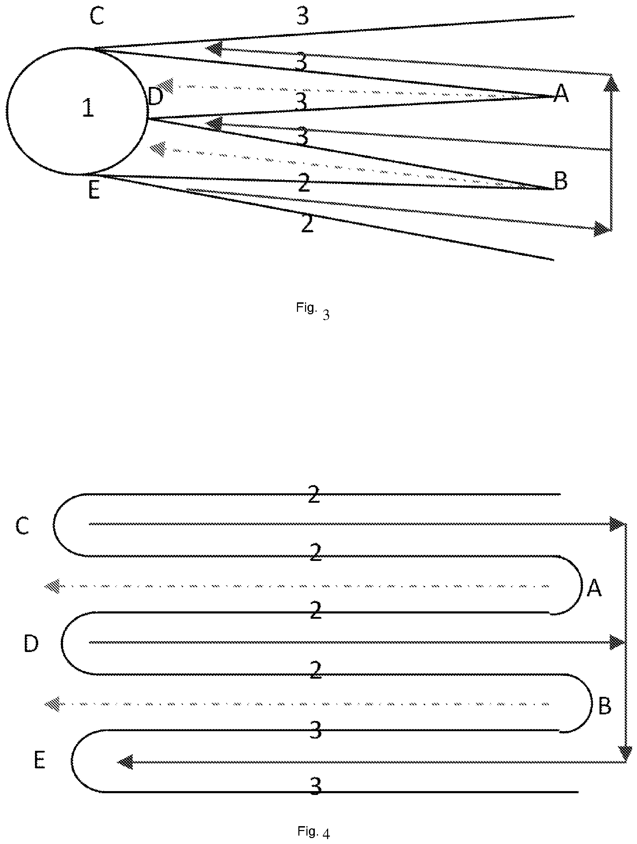

The leaf numbers of said first membrane unit 2 and said second membrane unit 3 are at least two. The leaf numbers of said first membrane unit 2 and said second membrane unit 3 may be equal or unequal. As shown in Figures 2 and 4, the number of said first membrane units 2 is larger than the number of said second membrane units 3. As shown in Figure 3, the number of said first membrane units 2 may also be smaller than the number of said second membrane units 3.

As shown in Figures 2 and 4, the front surface of a membrane leaf is sealed (with the front surface on the inner side and the reverse surface on the outside) by folding, gluing, etc. at C, D, and E (at the water collecting tube), and the reverse surface of the membrane leaf is sealed (with the reverse surface on the inner side and the front surface on the outside) by folding, gluing, etc. at A and B, collaborating with the sealing formed by gluing on the membrane leaf rear surfaces AD, AC and BD, BE, thereby separating pure water from raw water.

In the present embodiment, the raw water flow passage of said first membrane unit 2 and that of said second membrane unit 3 extend spirally in a circumferential direction of said water collecting tube 1. The waste water outlet 22 of said first membrane unit is located on a circumferential surface of the front surface of said membrane element, and the raw water inlet 31 of said second membrane unit is located on a circumferential surface of the front surface of said membrane element. The waste water outlet 22 of said first membrane unit is in communication with the raw water inlet 31 of said second membrane unit.

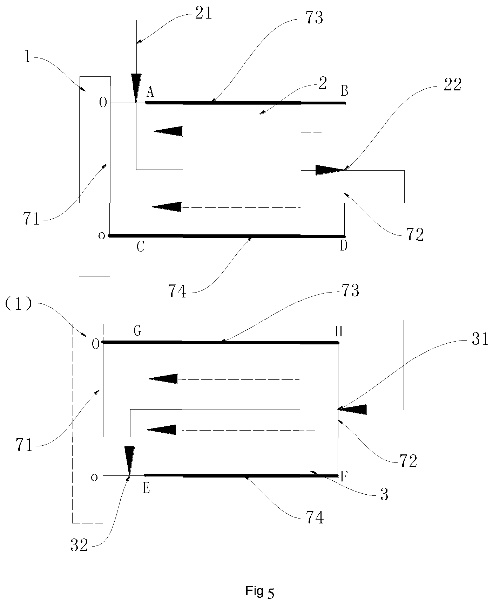

As shown in Figure 5, when said membrane element is expanded, said membrane element is provided with a first side 71 (the left side in the figure) and a second side 72 (the right side in the figure), as well as a third side 73 (the upper side in the figure) and a fourth side 74 (the lower side in the figure), wherein the first side 71 and the second side 72 are disposed facing each other, and the third side 73 and the fourth side 74 are disposed facing each other. Said third side 73 and said fourth side 74 are connected to said first side 71 and said second side 72, respectively.

The side of said first membrane unit 2 and that of said second membrane unit 3 that are respectively connected to said water collecting tube 1 are the first side 71 of the membrane element. The pure water outlet of said first membrane unit 2 and the pure water outlet of said second membrane unit 3 are connected to said water collecting tube 1 located on said first side 71. Thus, pure water yielded by said first membrane unit 2 and said second membrane unit 3 may be led out of said water collecting tube 1. The waste water outlet 22 of said first membrane unit and the raw water inlet 31 of said second membrane unit, when said membrane element is expanded, are located on the second side 72. When said membrane element is expanded, the raw water flow passage of said first membrane unit 2 and that of said second membrane unit 3 extend in the direction of said membrane element.

As shown in Figure 5, said membrane element is provided with a first end (the upper end in the figure) and a second end (the lower end in the figure) that face each other in an axial direction of said water collecting tube 1. In order to avoid water mixing, the raw water inlet 21 of said first membrane unit is located at the first end of said membrane element. The waste water outlet 32 of said second membrane unit is located at the second end of said membrane element. Specifically, the raw water inlet 21 of said first membrane unit is disposed on the third side 73 of said first membrane unit 2, and the waste water outlet 32 of said second membrane unit is disposed on the fourth side 74 of said second membrane unit 3. In order to lengthen the raw water flow passage as much as possible, the raw water inlet 21 of said first membrane unit may be disposed on the third side 73 that is close to said first side 71. The waste water outlet 32 of said second membrane unit may be disposed on said fourth side 74 that is close to said first side 71.

As shown in Figure 5, the part of the third side 73 on the side of the raw water flow passage of said first membrane unit 2 except the raw water inlet 21 of said first membrane unit (the section AB) is sealed, and the fourth side 74 on the side of the raw water flow passage of said first membrane unit 2 (the section oD) is sealed. The part of the fourth side 74 on the side of the raw water flow passage of said second membrane unit 3 except the waste water outlet 32 of said second membrane unit (the section EF) is sealed, and the third side 73 on the side of the raw water flow passage of said second membrane unit 3 (the section OH) is sealed.

As shown in Figure 5, in the present embodiment, the third side 73 on the side of the raw water flow passage of said first membrane unit 2, except the part corresponding to the raw water inlet 21 of said first membrane unit, and the third side 73 on the side of the raw water flow passage of said second membrane unit 2, except the part corresponding to the raw water inlet 21 of said first membrane unit (the section AB of the third side 73 of said first membrane unit 2 and the section GH of the third side 73 of said second membrane unit 3), are sealed by a first end cover 81, and a part of the third side 73 of said second membrane unit 3 corresponding to the raw water inlet 21 of said first membrane unit (the section OG of the fourth side 74 of said second membrane unit 3) is sealed by gluing on the surface of said second membrane unit 3 that is close to the third side 73 and on the side of the raw water flow passage.

The fourth side 74 on the side of the raw water flow passage of said second membrane unit 3, except the part corresponding to the waste water outlet 32 of said second membrane unit, and the fourth side 74 on the side of the raw water flow passage of said first membrane unit 2, except the part corresponding to the waste water outlet 32 of said second membrane unit (the section CD of the fourth side 74 of said first membrane unit 2 and the section EF of the third side 73 of said second membrane unit 3), are sealed by a second end cover 82, and a part of the fourth side 74 of said first membrane unit 2 corresponding to the waste water outlet 32 of said second membrane unit (the section oC of the fourth side 74 of said first membrane unit 2) is sealed by gluing on the surface of said first membrane unit 2 that is close to the fourth side 74 and on the side of the raw water flow passage.

It is noteworthy that in the present application, sealing by an end cover generally refers to applying glue on an end portion of a membrane unit and then binding the end portion to a wall of the end cover.

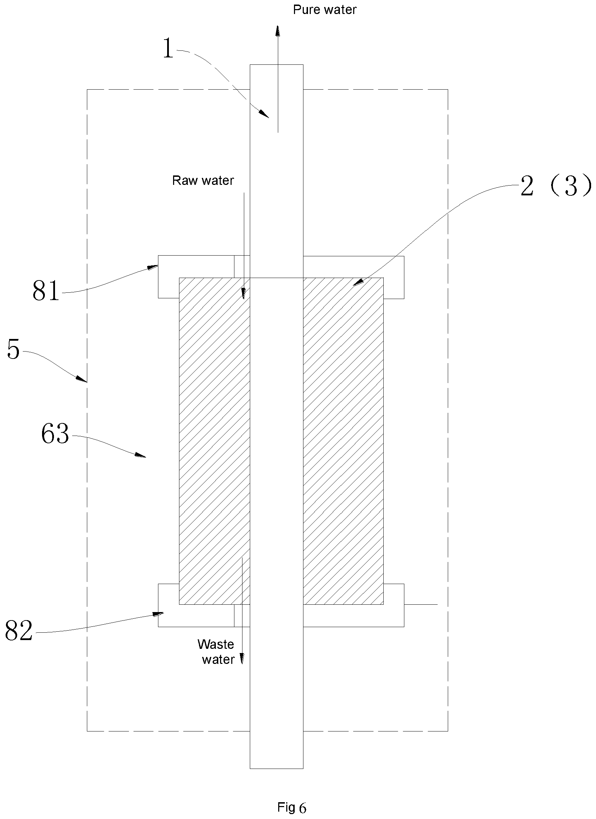

As shown in Figure 6, a membrane element in an embodiment of the present application may comprise a membrane shell 5 through which said water collecting tube 1 passes. Said first membrane unit 2 and said second membrane unit 3 are disposed in said membrane shell 5, and an interlayer 63 is formed between the peripheral surface of said first membrane unit 2 or that of said second membrane unit 3 and an inner wall of said membrane shell 5, allowing the waste water outlet 22 of said first membrane unit to be in communication with the raw water inlet 31 of said second membrane unit. A first opening in communication with the raw water inlet 21 of said first membrane unit is disposed on said first end cover 81. A second opening in communication with the waste water outlet 32 of said second membrane unit is disposed on said second end cover 82.

In the present embodiment, waste water produced by said first membrane unit 2, through a waste water outlet on its circumferential surface, flows into the raw water inlet 31 of said second membrane unit on the circumferential surface. Pure water filtered and yielded by said first membrane unit 2 and said second membrane unit 3 is led out by said water collecting tube 1. Thus, the raw water flow passage of said membrane element may be deemed to be the raw water flow passage of said first membrane unit 2 and the raw water flow passage of said second membrane unit 3 stacked; therefore, the surface flow rate of the membrane element in an embodiment of the present application is high, the anti-contamination performance of the membrane is high, the service life of the membrane is long, and the pure water yield of the membrane element under the same water inlet pressure remains unchanged. Further, in the present embodiment, said first membrane unit 2 and said second membrane unit 3 are wound on a water collecting tube 1 together in one step; therefore, the method for manufacturing the membrane element in the present embodiment is relatively simple. As can be seen in the above-described structure of the filter cartridge, the filter cartridge has a relatively simple structure and is easy to install.

In an optional embodiment, said first membrane unit 2 and said second membrane unit 3 may be made of the same membrane material. For example, said first membrane unit 2 and said second membrane unit 3 may be reverse osmosis membranes.

In an optional embodiment, considering the fact that waste water of said first membrane unit 2 enters said second membrane unit 3, since said first membrane unit 2 yields a part of pure water, the amount of water that enters said second membrane unit 3 is smaller than the amount of water that enters said first membrane unit 2; in order to maintain the surface flow rate of said second membrane unit 3, said first membrane unit 2 has a surface area larger than that of said second membrane unit 3 (in other words, said first membrane unit 2 has a membrane leaf number larger than that of said second membrane unit 3).

In another optional embodiment, considering the linear rate of a membrane and other actual conditions, a plurality of first membrane units 2 may be provided, and said plurality of first membrane units 2 are made of the same or different filter membrane materials. Alternatively, a plurality of second membrane units 3 may be provided, and said plurality of second membrane units 3 are made of the same or different filter membrane materials. Further alternatively, a plurality of first membrane units 2 and said second membrane units 3 may be provided, and said plurality of first membrane units 2 and said second membrane units 3 are made of the same or different filter membrane materials.

In another optional embodiment, in order to ensure that yielded pure water retains certain mineral substances, said first membrane unit 2 and said second membrane unit 3 may be made of different membranes. For example, said first membrane unit 2 may be a nanofiltration membrane and said second membrane unit 3 may be a reverse osmosis membrane. In the present embodiment, in order to ensure a desalination rate of yielded water and prevent formation of scale after water is boiled, said first membrane unit 2 has a surface area smaller than that of said second membrane unit 3 (in other words, said first membrane unit 2 has a membrane leaf number smaller than that of said second membrane unit).

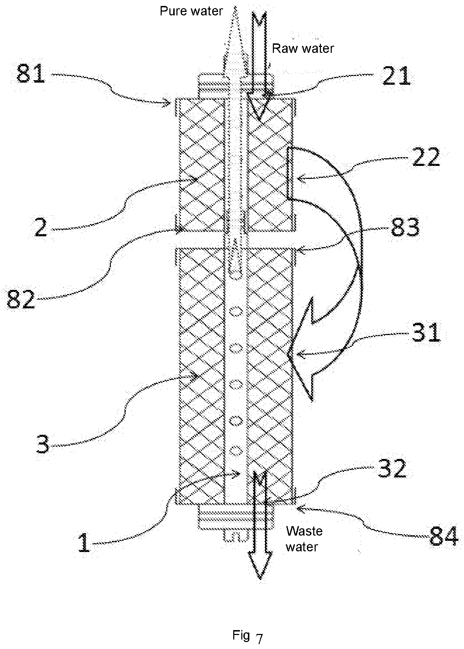

Figures 7 to 8 show a specific embodiment of a membrane element in the present application. As shown in Figure 7, in the present embodiment, the waste water outlet 22 of said first membrane unit is located on a circumferential surface of said membrane element, and the raw water inlet 31 of said second membrane unit is located on a circumferential surface of said membrane element. In the present embodiment, the raw water flow passage of said first membrane unit 2 and that of said second membrane unit 3 extend spirally in a circumferential direction of said water collecting tube 1. In order to avoid water mixing, the raw water inlet 21 of said first membrane unit is located at the upper end of said first membrane unit 2. The waste water outlet 32 of said second membrane unit is located at the lower end of said second membrane unit 3.

A difference from the previous embodiment is that said first membrane unit 2 and said second membrane unit 3 are spaced and configured in parallel in an axial direction of said water collecting tube 1. Said first membrane unit 2 and said second membrane unit 3 may be wound on said water collecting tube 1 together in one step or two steps.

As shown in Figure 7, in the present embodiment, said first membrane unit 2 is provided with a first end (the upper end of said first membrane unit 2 shown in the figure) and a second end (the lower end of said first membrane unit 2 shown in the figure) that face each other in an axial direction of said water collecting tube 1; said second membrane unit 3 is provided with a third end (the upper end of said second membrane unit 3 shown in the figure) and a fourth end (the upper end of said second membrane unit 3 shown in the figure) that face each other in an axial direction of said water collecting tube 1, wherein the second end of said first membrane unit 2 and the third end of said second membrane unit 3 are disposed adjacent to each other.

Said membrane element comprises a first end cover 81, a second end cover 82, a third end cover 83, and a fourth end cover 84. Said first end cover 81, second end cover 82, third end cover 83 and fourth end cover 84 are correspondingly disposed at the first end and second end of said first membrane unit 2 and disposed at the third end and fourth end of said second membrane unit 3.

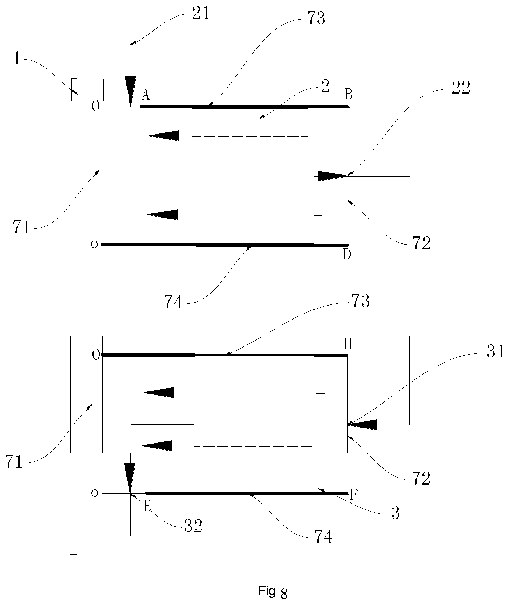

As shown in Figure 8, the part of the third side 73 on the side of the raw water flow passage of said first membrane unit 2 except the raw water inlet 21 of said first membrane unit (the section AB) is sealed by the first end cover 81. A third opening in communication with the raw water inlet 21 of said first membrane unit is disposed on said first end cover 81.

The fourth side 74 on the side of the raw water flow passage of said first membrane unit 2 (the section oD) is sealed by the second end cover 82.

The third side 73 on the side of the raw water flow passage of said second membrane unit 3 (the section OH) is sealed by the third end cover 83.

The part of the fourth side 74 on the side of the raw water flow passage of said second membrane unit 3 except the waste water outlet 32 of said second membrane unit (the section oF) is sealed by the fourth end cover 84. A fourth opening in communication with the waste water outlet 32 of said second membrane unit is disposed on said fourth end cover 84.

Said second end cover 82 and said third end cover 83 seal the fourth side 74 of said first membrane unit 2 and the third side 73 of said second membrane unit 3, respectively, thereby separating the raw water flow passage of said first membrane unit 2 from that of said second membrane unit 3.

Like the previous embodiment, waste water produced by said first membrane unit 2, through a waste water outlet on its circumferential surface, flows into the raw water inlet 31 of said second membrane unit on the circumferential surface. Thus, the raw water flow passage of said membrane element may be deemed to be the raw water flow passage of said first membrane unit 2 and the raw water flow passage of said second membrane unit 3 stacked; therefore, the surface flow rate of the membrane element in an embodiment of the present application is high, the anti-contamination performance of the membrane is high, the service life of the membrane is long, and the pure water yield of the membrane element under the same water inlet pressure remains unchanged. Further, in the present embodiment, said first membrane unit 2 and said second membrane unit 3 are wound on a water collecting tube 1 together in one step or two steps; therefore, the method for manufacturing the membrane element in the present embodiment is relatively simple. Compared with the previous embodiment, the membrane element has a relatively small sectional area but a relatively long raw water flow passage.

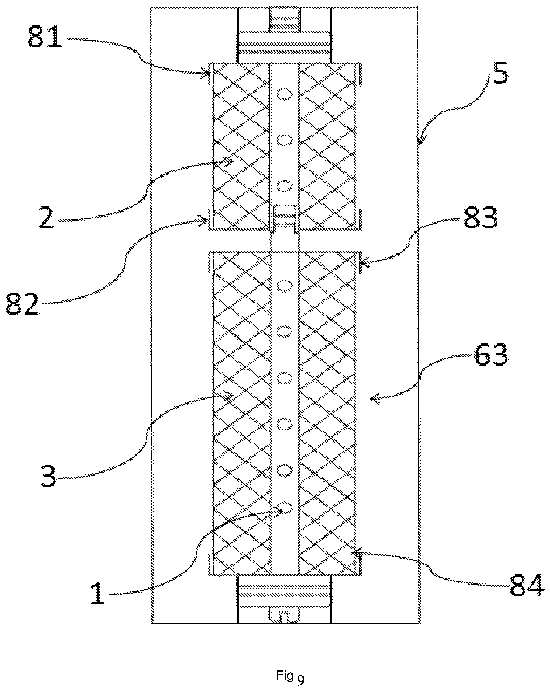

As shown in Figure 9, a membrane element in an embodiment of the present application may comprise a membrane shell 5 through which said water collecting tube 1 passes. Said first membrane unit 2 and said second membrane unit 3 are disposed in said membrane shell 5, and an interlayer 63 is formed between the peripheral surface of said first membrane unit 2 and that of said second membrane unit 3 and an inner wall of said membrane shell 5, allowing the waste water outlet 22 of said first membrane unit to be in communication with the raw water inlet 31 of said second membrane unit.

In another optional embodiment, in order to ensure that yielded pure water retains certain mineral substances, said first membrane unit 2 and said second membrane unit 3 may be made of different membranes. For example, said first membrane unit 2 may be a nanofiltration membrane and said second membrane unit 3 may be a reverse osmosis membrane. In the present embodiment, in order to ensure a desalination rate of yielded water and prevent formation of scale after water is boiled, said first membrane unit 2 has a surface area smaller than that of said second membrane unit 3.

For example, in the embodiment where said first membrane unit 2 and said second membrane unit 3 are disposed in an axial direction of said water collecting tube 1, the length of said first membrane unit 2 in an axial direction of said water collecting tube 1 is smaller than the length of said second membrane unit 3 in an axial direction of said water collecting tube 1 (as shown in the figure).

Alternatively, in the embodiment where said first membrane unit 2 and said second membrane unit 3 are stacked, the area of a cross-section of said first membrane unit 2 that is perpendicular to an axial direction of said water collecting tube 1 is smaller than the area of a cross-section of said second membrane unit 3 that is perpendicular to an axial direction of said water collecting tube 1.

Certainly, in another optional embodiment, the raw water flow passage of said first membrane unit 2 or that of said second membrane unit 3 may also extend spirally in a circumferential direction of said water collecting tube 1.

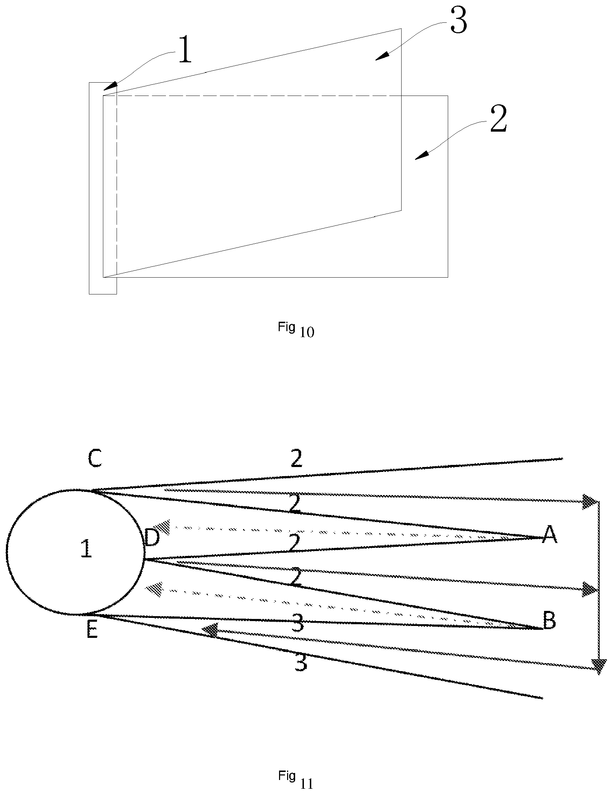

Figures 10 to 14 show another specific embodiment of a membrane element in the present application. As shown in Figure 10, the membrane element in the embodiment comprises a water collecting tube 1, a first membrane unit 2, and a second membrane unit 3. Said first membrane unit 2 and said second membrane unit 3 are wound on said water collecting tube 1 together in one step.

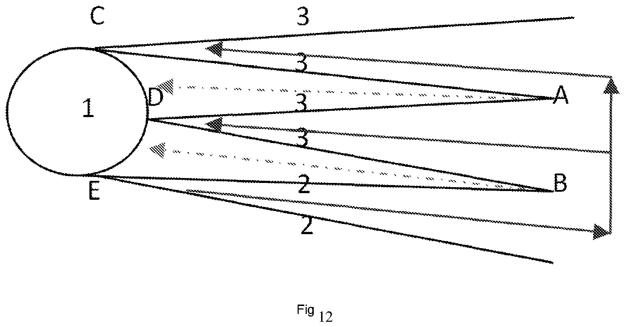

When said membrane element is expanded, said first membrane unit 2 and said second membrane unit 3 are stacked. For example, as shown in Figures 11 and 12, a raw water flow passage is formed between the front surfaces of adjacent first membrane units 2. A raw water flow passage is also formed between the front surfaces of adjacent second membrane units 3. The rear surface of said first membrane unit 2 and the rear surface of said second membrane unit 3 are pure water flow passages and all lead to said water collecting tube 1. The raw water flow passage of said first membrane unit 2 flows in a direction away from said water collecting tube 1, and the raw water flow passage of said second membrane unit 3 flows in a direction facing said water collecting tube 1.

The membrane materials of said first membrane unit 2 and said second membrane unit 3 may be the same or different. The membrane materials between said first membrane units 2 may also be the same or different. The membrane materials between said second membrane units 3 may also be the same or different.

The leaf numbers of said first membrane unit 2 and said second membrane unit 3 are at least two. The leaf numbers of said first membrane unit 2 and said second membrane unit 3 may be equal or unequal. As shown in Figure 11, the number of said first membrane units 2 is larger than the number of said second membrane units 3. As shown in Figure 12, the number of said first membrane units 2 may also be smaller than the number of said second membrane units 3.

As shown in Figure 11, the front surface of a membrane leaf is sealed (with the front surface on the inner side and the reverse surface on the outside) by folding, gluing, etc. at C, D, and E (at the water collecting tube), and the reverse surface of the membrane leaf is sealed (with the reverse surface on the inner side and the front surface on the outside) by folding, gluing, etc. at A and B, collaborating with the sealing formed by gluing on the membrane leaf rear surfaces AD, AC and BD, BE, thereby separating pure water from raw water.

In the present embodiment, the raw water flow passage of said first membrane unit 2 and that of said second membrane unit 3 extend spirally in a circumferential direction of said water collecting tube 1.

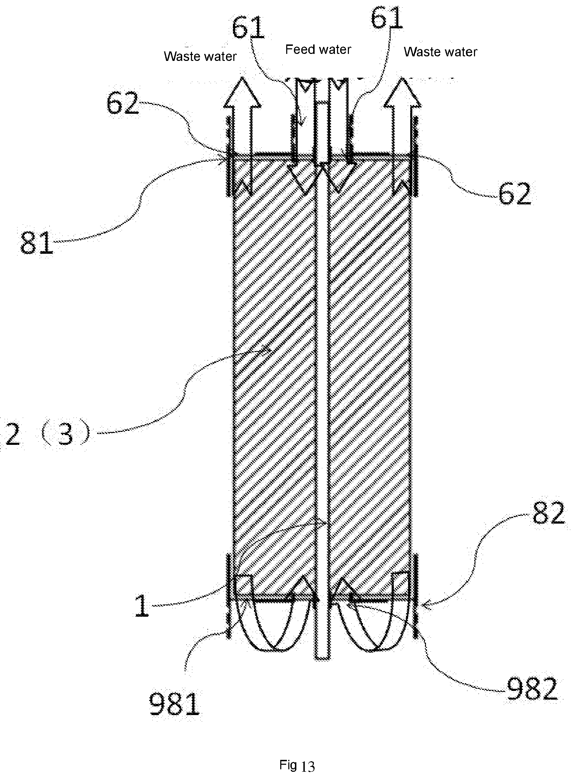

As shown in Figure 13, said membrane element is provided with a first end (the upper end in the figure) and a second end (the lower end in the figure) that face each other in an axial direction of said water collecting tube 1. The raw water inlet 21 of said first membrane unit is located at the first end of said membrane element. The waste water outlet 22 of said first membrane unit is located at the second end of said membrane element. The raw water inlet 31 of said second membrane unit is located at the second end of said membrane element. The waste water outlet 22 of said first membrane unit is in communication with the raw water inlet 31 of said second membrane unit. The waste water outlet 32 of said second membrane unit is located at the first end of said membrane element.

Said membrane element further comprises a first end cover 81 disposed at the first end of said membrane element and a second end cover 82 disposed at the second end of said membrane element. Said first end cover 81 is provided with a first through hole 61 that is in communication with the raw water inlet 21 of said first membrane unit and a second through hole 62 that is in communication with the waste water outlet 32 of said second membrane unit, and said second end cover 82 is provided with a third through hole 981 that is in communication with the waste water outlet 22 of said first membrane unit and a fourth through hole 982 that is in communication with the raw water inlet 31 of said second membrane unit. The third through hole 981 and the fourth through hole 982 may, by a membrane shell, form flow passages that are in communication with each other.

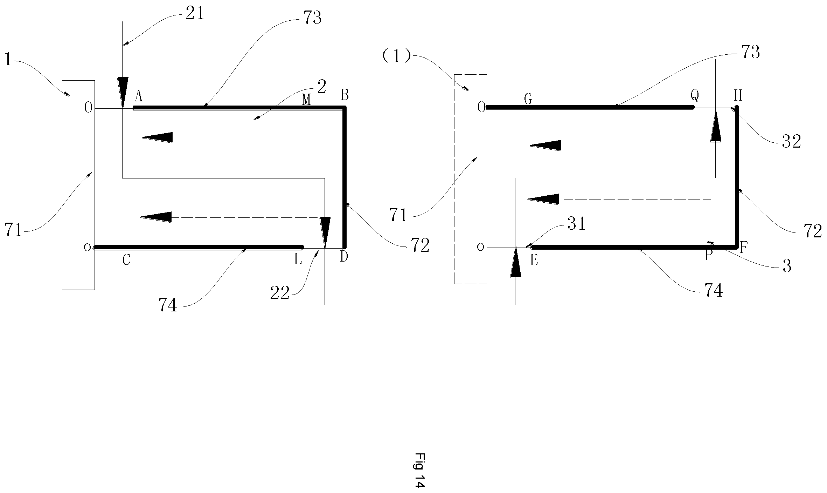

As shown in Figure 14, said membrane element, when expanded, is provided with a first side 71 (the left side in the figure), which is connected to said water collecting tube 1, and a second side 72 (the right side in the figure) facing said first side 71. Said membrane element, when expanded, is further provided with a third side 73 (the upper side in the figure) and a fourth side 74 (the lower side in the figure) that face each other, said third side 73 and said fourth side 74 being connected to said first side 71 and said second side 72, respectively.

The waste water outlet 22 of said first membrane unit is disposed on said fourth side 74 that is close to said second side 72. The raw water inlet 31 of said second membrane unit is disposed on the fourth side 74 that is close to said first side 71.

In order to lengthen the raw water flow passage as much as possible, the raw water inlet 21 of said first membrane unit is disposed on the third side 73 that is close to said first side 71. The waste water outlet of said second membrane unit 3 is disposed on said third side 73 that is close to said second side 72.

In order to separate the raw water flow passage and pure water flow passage of said first membrane unit 2 and those of said second membrane unit 3, the part of the third side 73 on the side of the raw water flow passage of said first membrane unit 2 except the raw water inlet 21 of said first membrane unit (the section AB) is sealed; the part of the fourth side 74 on the side of the raw water flow passage of said first membrane unit 2 except the waste water outlet 22 of said first membrane (the oL section) unit is sealed; the part of the fourth side 74 on the side of the raw water flow passage of said second membrane unit 3 except the raw water inlet 31 of said second membrane (the OQ section) unit is sealed; the part of the third side 73 on the side of the raw water flow passage of said second membrane unit 3 except the waste water outlet 32 of said second membrane (the EF section) unit is sealed; the second side 72 of said membrane element is sealed.

As shown in Figure 14, the third side 73 on the side of the raw water flow passage of said first membrane unit 2, except the part corresponding to the raw water inlet 21 of said first membrane unit and the waste water outlet 32 of said second membrane unit, as well as the third side 73 on the side of the raw water flow passage of said second membrane unit 3, except the part corresponding to the raw water inlet 21 of said first membrane unit and the waste water outlet 32 of said second membrane unit (namely, the section AM of the third side 73 of said first membrane unit 2 and the section GQ of the third side 73 of said second membrane unit 3), are sealed by a first end cover 81. A part of the third side 73 of said first membrane unit 2 corresponding to the waste water outlet 32 of said second membrane unit (namely, the section MB of the third side 73 of said first membrane unit 2) is sealed by gluing on the surface of said first membrane unit 2 that is close to the third side 73 and on the side of the raw water flow passage. A part of the third side 73 of said second membrane unit 3 corresponding to the raw water inlet 21 of said first membrane unit (namely, the section OG of the third side 73 of said second membrane unit 3) is sealed by gluing on the surface of said second membrane unit 3 that is close to the third side and on the side of the raw water flow passage.

The fourth side 74 on the side of the raw water flow passage of said first membrane unit 2, except the part corresponding to the waste water outlet 22 of said first membrane unit and the raw water inlet 31 of said second membrane unit, as well as the fourth side 74 on the side of the raw water flow passage of said second membrane unit 3, except the part corresponding to the waste water outlet 22 of said first membrane unit and the raw water inlet 31 of said second membrane unit (namely, the section CL of the fourth side 74 of said first membrane unit 2 and the section EP of the fourth side 74 of said second membrane unit 3), are sealed by said second end cover 82. A part of the fourth side 74 of said first membrane unit 2 corresponding to the raw water inlet 31 of said second membrane unit (the section OC of the fourth side 74 of said first membrane unit 2) is sealed by gluing on the surface of said first membrane unit 2 that is close to the fourth side 74 and on the side of the raw water flow passage. A part of the fourth side 74 of said second membrane unit 3 corresponding to the waste water outlet 22 of said first membrane unit (namely, the section PF of the fourth side 74 of said second membrane unit 3) is sealed by gluing on the surface of said second membrane unit 3 that is close to the fourth side and on the side of the raw water flow passage.

The second side 72 on the side of the raw water flow passage of said membrane element is sealed by an adhesive tape so that no waste water flows out from a circumferential surface of said membrane element.

In the present embodiment, said first membrane unit 2 and said second membrane unit 3 may be made of the same membrane material. For example, said first membrane unit 2 and said second membrane unit 3 may be reverse osmosis membranes.

Certainly, materials and numbers of said first membrane unit 2 and said second membrane unit 3 may be selected as needed, and will not be described again herein.

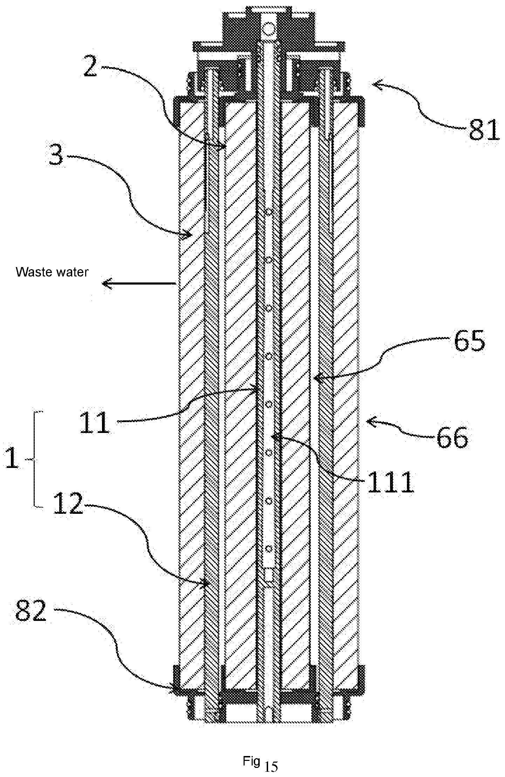

Figures 15 to 22 show another specific embodiment of a membrane element in the present application. As shown in Figure 15, the present application discloses a membrane element, comprising a water collecting tube 1, a first membrane unit 2, and a second membrane unit 3. The raw water flow passage of said first membrane unit 2 and that of said second membrane unit 3 extend spirally in a circumferential direction of said water collecting tube 1.

Said water collecting tube 1 comprises a first central tube 11 and a second central tube 12 that is sleeved upon said first central tube 11. Said first membrane unit 2 is wound on said first central tube 11, and a first pure water guide passage 111 that is in communication with the pure water outlet of said first membrane unit 2 is disposed on the inner side of said first central tube 11, for collecting pure water filtered and yielded by said first membrane unit 2. Said second membrane unit 3 is wound on said second central tube 12, a second pure water guide passage 112 that is in communication with the pure water outlet of said second membrane unit 3 is disposed on said second central tube 12, and said second pure water guide passage 112 is separated from the inner side of said second central tube 12.

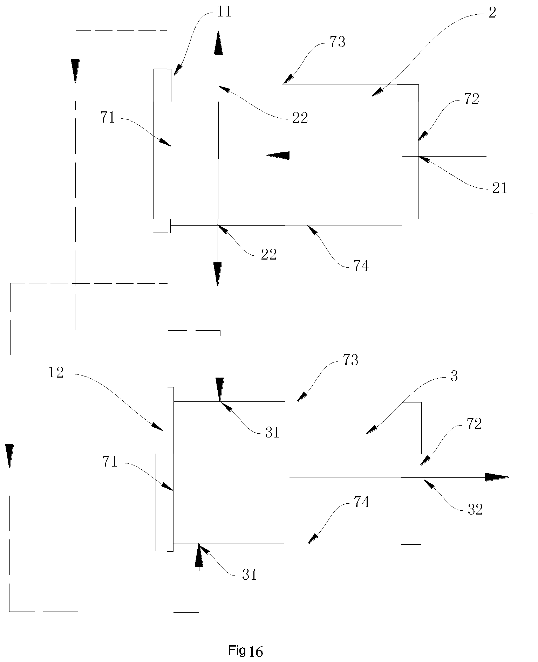

As shown in Figure 16, when said first membrane unit 2 is expanded, the first side 71 (the left side in the figure) of said first membrane unit 2 is connected to said first central tube 11; in other words, the pure water outlet of said first membrane unit 2 is located on the first side 71; in other words, the rear interlayer of said first membrane unit 2 is in communication with said first central tube 11, allowing pure water subjected to osmotic filtration in the raw water flow passage to be collected in said first central tube 11.

The raw water inlet 21 of said first membrane unit is located on the second side 72 that faces said first side 71 (namely, located on a circumferential surface after being wound). The waste water outlet 22 of said first membrane unit is located on the third side 73 and the fourth side 74. Said third side 73 and said fourth side 74 are connected to said first side 71 and said second side 72, respectively. In other words, waste water filtered out by said first membrane unit 2 flows out from both end portions of said first membrane unit 2. In order to lengthen the raw water flow passage as much as possible, in the present embodiment, the waste water outlet 22 of said first membrane unit is close to the first side 71 of said second membrane unit 3 and far away from its second side 72.

When said second membrane unit 3 is expanded, the first side 71 (the left side in the figure) of said second membrane unit 3 is connected to said second central tube 12; in other words, the pure water outlet of said second membrane unit 3 is located on the first side 71; in other words, the pure water outlet of said second membrane unit 3 is in communication with said second central tube 12, allowing pure water subjected to osmotic filtration in the raw water flow passage to be collected in said second central tube 12. The waste water outlet 32 of said second membrane unit is located on the second side 72 of said second membrane unit 3 that faces said first side 71 (namely, located on a circumferential surface after being wound).

The raw water inlet 31 of said second membrane unit is located on the third side 73 and the fourth side 74 of said second membrane unit 3. Said third side 73 and said fourth side 74 are connected to said first side 71 and said second side 72, respectively. In other words, the raw water inlet 21 of said first membrane unit is located at both ends thereof. In order to lengthen the raw water flow passage as much as possible, in the present embodiment, the raw water inlet 31 of said second membrane unit is close to its first side 71 and far away from its second side 72.

As shown in Figure 15, in the present embodiment, a first gap space 65 is formed between an outer wall of said first membrane unit 2 and an inner wall of said second central tube 12, allowing raw water to flow from the raw water inlet 21 of said first membrane unit into said first membrane unit 2 through said first gap space 65. Said membrane element may further comprise a membrane shell 5 (not shown), and a second gap space 66 is formed between an inner wall of said membrane shell 5 and an outer wall of said second membrane unit 3, allowing waste water filtered out by said second membrane unit 3 to be guided to the outside from said second gap space 66.

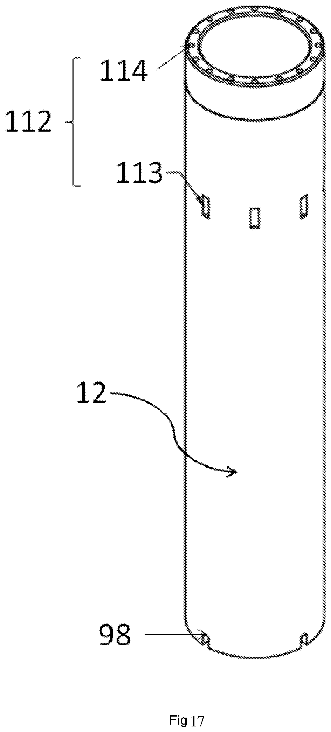

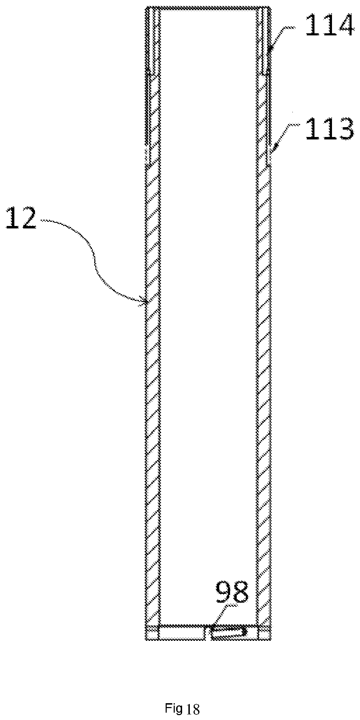

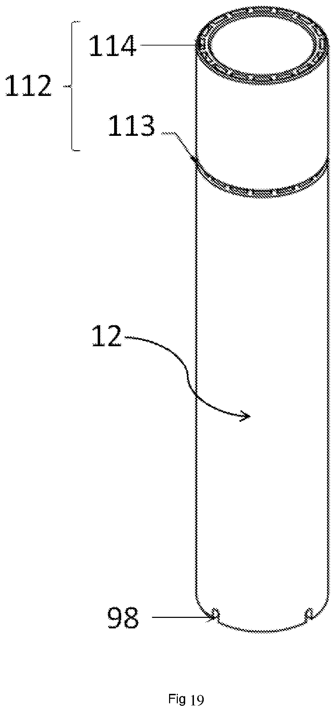

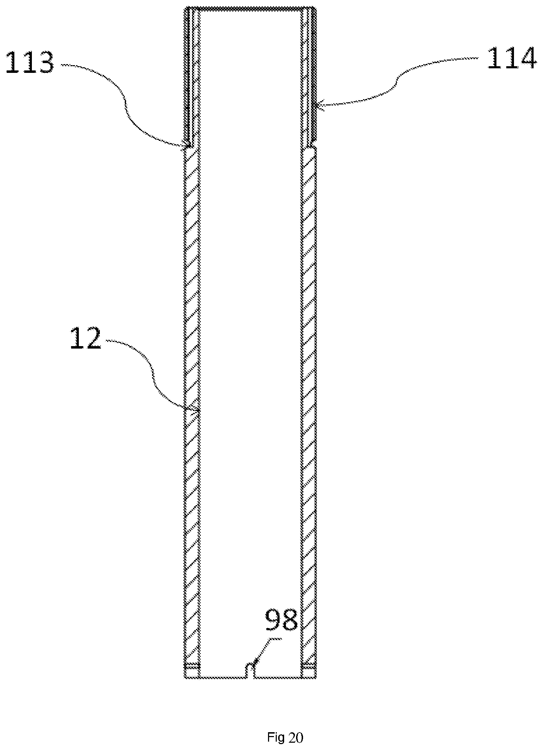

As shown in Figures 17 and 18, said second central tube 12 may be roughly cylindrical. A penetrating hole for disposing said first membrane unit 2 and said first central tube 11 may be provided on an inner side of said second central tube 12. A plurality of openings configured at intervals in a circumferential direction (namely, a first passage 113) may be disposed on an outer side wall of said second central tube 12. A second passage 114 that extends roughly in an axial direction of said second central tube 12 may be formed on a wall of said second central tube 12. Said second passage 114 is in communication with said first passage 113 to form a second pure water guide passage 112. In addition, said second pure water guide passage 112 is separated from the penetrating hole so that pure water yielded by said second membrane unit 3 is separated from said first membrane unit 2. Said second passage 114 opens into one or both of the two ends that face each other in an axial direction of said second central tube 12, for guiding pure water out from said second central tube 12. Preferably, a plurality of first passages 113 are provided, and said plurality of first passages 113 are configured at intervals in a circumferential direction of said second central tube 12, and said second passage 114 extends in an axial direction of said second central tube 12. Certainly, the second central tube 1221 may also have another structure; for example, Figures 19 and 20 show another optional embodiment of the second central tube 12.

Said membrane element is provided with a first end and a second end that face each other in an axial direction of said water collecting tube 1. Said membrane element may comprise an end cover that is disposed at the same end of said first membrane unit 2 and said second membrane unit 3, and said end cover is provided with a passage that allows the waste water outlet of said first filter membrane (namely, the first gap space 65) to be in communication with the waste water outlet of said second filter membrane (namely, the second gap space 66).

In the present embodiment, the waste water outlet 22 of said first membrane unit is located at both ends of said membrane element, and the raw water inlet 31 of said second membrane unit is located at both ends of said membrane element.

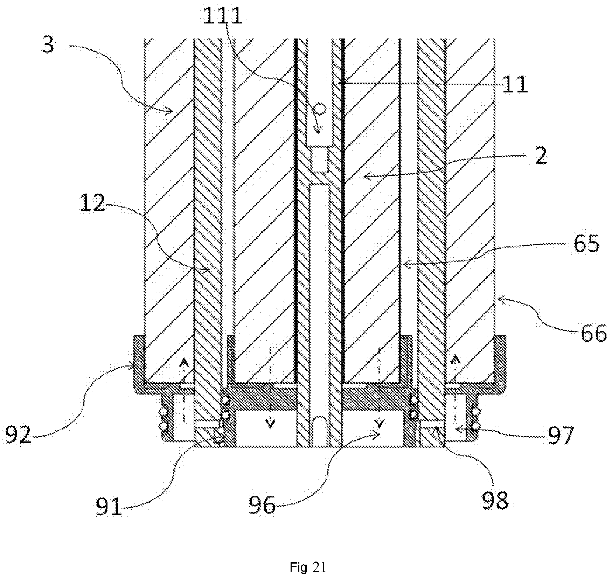

As shown in Figure 21, specifically, said membrane element comprises a second end cover 82 located at the lower end. Said second end cover 82 comprises: a first cover body 91 sleeved upon said first membrane unit 2 and a second cover body 92 sleeved upon said second membrane unit 3, said first cover body 91 being provided with a first space 96 that is in communication with the waste water outlet of said first filter membrane, said second cover body 92 being provided with a second space 97 that is in communication with the raw water inlet of said second filter membrane. A fifth through hole 98 for allowing communication between said first space 96 and said second space 97 is disposed on a side wall of the second central tube 12. Said first cover body 91 matches an inner wall of said second central tube 12 to seal said first gap space 65.

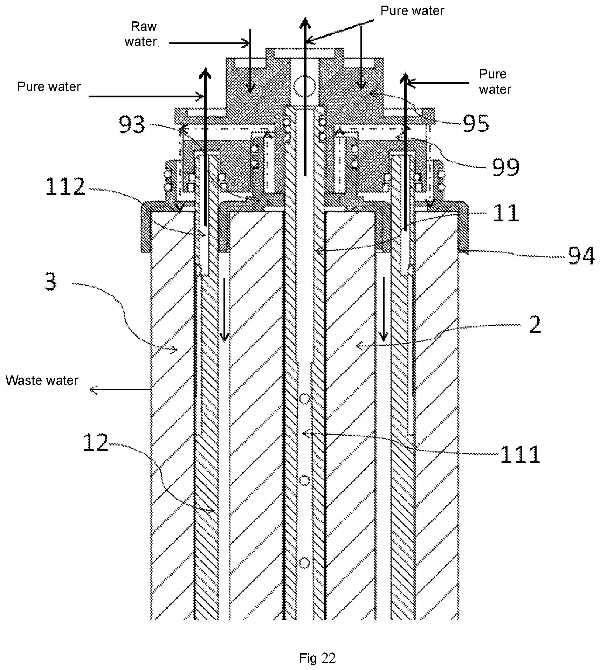

As shown in Figure 22, said membrane element comprises a first end cover 81 located at the upper end. Said first end cover 81 is provided with a first pure water outlet that is in communication with the first pure water guide passage 111 of said first central tube 11, a second pure water outlet that is in communication with the first pure water guide passage 111 of said second central tube 12, and a waste water passage that is in communication with the waste water outlet of said second filter membrane. Preferably, said first end cover 81 is provided with a pure water mixing passage (not shown) for allowing communication between said first pure water guide passage 111 and said second pure water guide passage.

Specifically, said first end cover 81 comprises a third cover body 93 sleeved upon said first membrane unit 2, a fourth cover body 94 sleeved upon said second membrane unit 3, and a fifth cover body 95 sleeved upon the end portion of said second central tube 12 and that of said first central tube 11. Said third cover body 93 is provided with a first opening that is in communication with the waste water outlet 22 of said first membrane unit and a second opening that is in communication with the raw water inlet 21 of said first membrane unit, said first opening being separated from said second opening. An outer wall of said third cover body 93 matches an inner wall of said second central tube 12 to seal said first gap space 65. A third opening in communication with the waste water outlet 32 of said second membrane unit is disposed on said fourth cover body 94; said fifth cover body 95 is provided with a first pure water outlet that is in communication with said first central tube 11, a second pure water outlet that is in communication with said second central tube 12, a waste water passage that is in communication with the first opening of said third cover body 93, and a fourth passage 99 for allowing communication between the second opening of said third cover body 93 and the third opening of said fourth cover body 94. Specifically, said fourth passage 99 comprises a first flow passage that extends in an axial direction of said membrane element and is in communication with an end portion of said first membrane unit 2, a second flow passage that extends in an axial direction of said membrane element and is in communication with an end portion of said second membrane unit 3, and a third flow passage that is in communication with said first flow passage and said second flow passage and extends in a radial direction of said membrane element.

In the present embodiment, raw water let in from a circumferential surface of said first membrane unit 2 may enter the raw water flow passage of said second membrane unit 3 after being filtered by said first membrane unit 2; in other words, the raw water is filtered again by said second membrane unit 3, and pure water is yielded after filtration again by said second membrane unit 3. Thus, the raw water flow passage of said membrane element may be deemed to be the raw water flow passage of said first membrane unit 2 and the raw water flow passage of said second membrane unit 3 stacked; therefore, the surface flow rate of the membrane element in an embodiment of the present application is high, the anti-contamination performance of the membrane is high, the service life of the membrane is long, and the pure water yield of the membrane element under the same water inlet pressure remains unchanged. In the present embodiment, said first central tube 11 and said second central tube 12 are sleeved upon each other, and said second pure water guide passage 112 is disposed on said second central tube 12; thus, said membrane element has a simple structure and a small size, and is easy to install. In addition, the first membrane unit 2 and second membrane unit 3 in the present embodiment have relatively long raw water flow passages; therefore, the membrane element has a high surface flow rate, a high filtration efficiency, and high anti-contamination performance.

In another optional embodiment, the waste water outlet 32 of said second membrane unit is located on one of the third side 73 and the fourth side 74; in other words, the waste water outlet 32 of said second membrane unit is located at one end thereof. Accordingly, the raw water inlet 21 of said first membrane unit is also located on one of the third side 73 and the fourth side 74; in other words, the raw water inlet 21 of said first membrane unit is located at the end corresponding to the waste water outlet 32 of said second membrane unit. For example, both the waste water outlet 32 of said second membrane unit and the raw water inlet 21 of said first membrane unit are located at the upper end. Certainly, the structures of said first end cover 81 and said second end cover 82 may also be changed by reference to the above-described structure, and no similar descriptions will be provided again.

In the present embodiment, said first membrane unit 2 is a nanofiltration membrane and said second membrane unit 3 is a reverse osmosis membrane. Preferably, a ratio of a surface area of said first membrane unit 2 to a surface area of said second membrane unit 3 is in a range of 1:1 to 1:2.

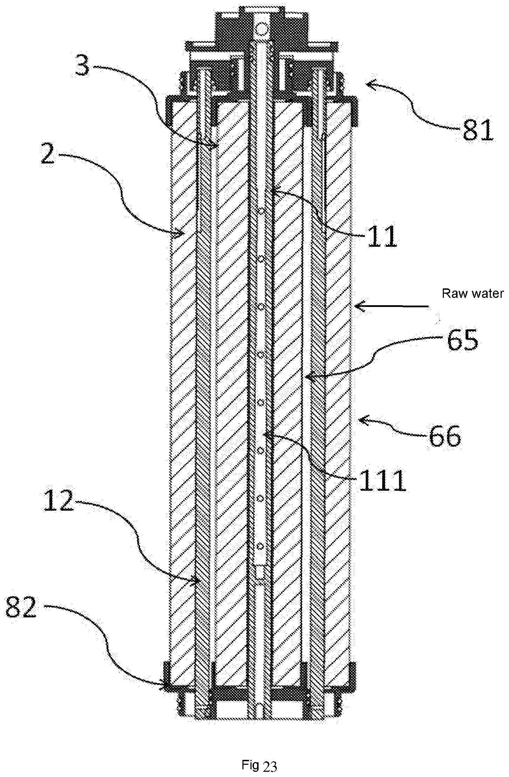

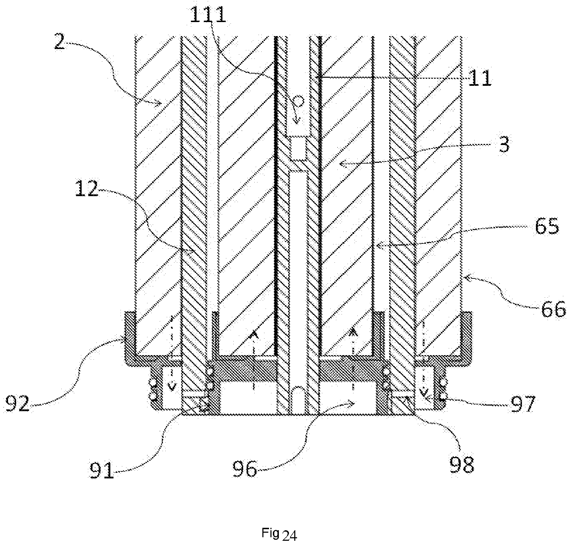

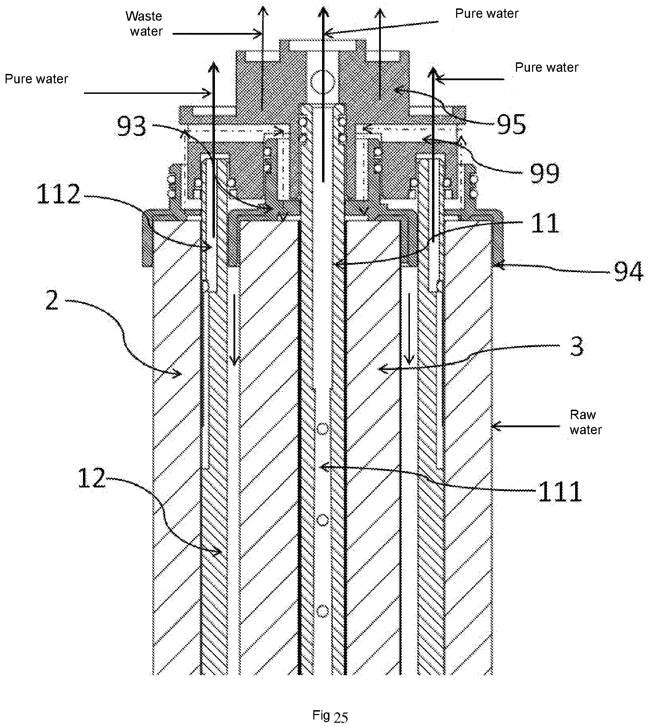

Figures 23 to 25 show another optional embodiment of the present application. As shown in Figures 23, 24, and 25, a difference between another optional embodiment and the previous embodiment is that said first membrane unit 2 is wound on said second central tube 12 and that said second membrane unit 3 is wound on said first central tube 11.

In the present embodiment, a first gap space 65 is formed between an outer wall of said second membrane unit 3 and an inner wall of said second central tube 12, allowing waste water filtered out by said first membrane unit 2 to flow from the raw water inlet 31 of said second membrane unit into said second membrane unit 3 through said first gap space 65. Said membrane element may further comprise a membrane shell 5, and a second gap space 66 is formed between an inner wall of said membrane shell 5 and an outer wall of said first membrane unit 2, allowing raw water to flow from the raw water inlet 21 of said first membrane unit into said first membrane unit 2 through said second gap space 66.

In another optional embodiment, the waste water outlet 22 of said first membrane unit is located at an end of said membrane element. Thus, the raw water inlet 31 of said second membrane unit may also be located at an end of said membrane element that corresponds to the waste water outlet 22 of said first membrane unit. For example, the waste water outlet 22 of said first membrane unit and the raw water inlet 31 of said second membrane unit are located at the first end of said membrane element. When said membrane element is expanded, the waste water outlet 22 of said first membrane unit is located on the third side 73 thereof. The raw water inlet 31 of said second membrane unit is also located on the third side thereof.

In the present embodiment, both said first membrane unit 2 and said second membrane unit 3 are reverse osmosis membranes. Preferably, a ratio of a surface area of said first membrane unit 2 to a surface area of said second membrane unit 3 is in a range of 2:1 to 1:1.

For the specific structure of a membrane element in the present embodiment, references may be made to the previous embodiment, and no similar descriptions will be provided again.

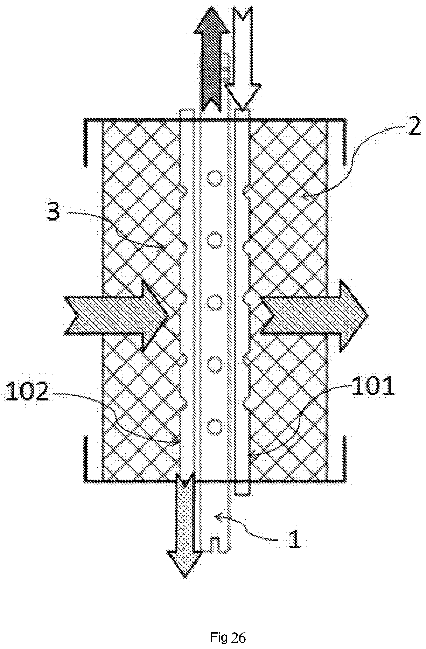

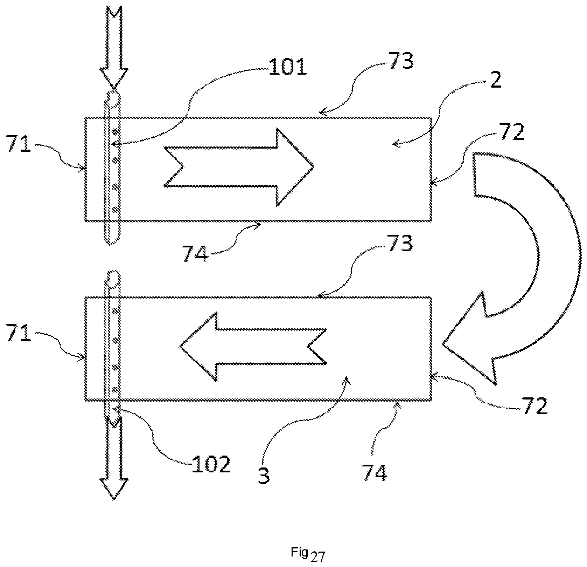

As shown in Figures 26 and 27, an embodiment of the present application further discloses a membrane element that further comprises a first water tube 101 and a second water tube 102. The first side 71 on the side of the pure water flow passage of the first membrane unit 2 and the first side 71 on the side of the pure water flow passage of the second membrane unit 3 are disposed on the water collecting tube 1. The first water tube 101 is disposed on the first side 71 on the side of the raw water flow passage of the first membrane unit 2, so that the front surface of the first membrane unit 2 is wrapped around the first water tube 101. The first water tube 101 comprises a plurality of first guide holes disposed on a side wall of said first water tube 101, a first guide passage that extends in an axial direction and is in communication with said plurality of first guide holes, and a first opening that is disposed in an end portion of said first water tube 101 and is in communication with said first guide passage. Raw water may enter the first guide passage through the first opening and be guided into said first membrane unit 2 through the first guide holes. Through the first guide holes, the raw water may extend spirally in a circumferential direction and flow to the outside from the second side 72 (the outer edge formed after winding) of said first membrane unit 2. The second water tube 102 is disposed on the first side 71 on the side of the raw water flow passage of the second membrane unit 3, so that the front surface of the second membrane unit 3 is wrapped around the second water tube 102. Said second water tube 102 comprises a plurality of second guide holes disposed on a side wall of said second water tube 102, a second guide passage that extends in an axial direction and is in communication with said plurality of second guide holes, and a second opening that is disposed in an end portion of said second water tube 102 and is in communication with said second guide passage. Waste water outputted from the second side 72 of said first membrane unit 2 enters the second side 72 (the outer edge formed after winding) of said second membrane unit 3, flows extending spirally in a circumferential direction, enters the second guide holes of the second water tube 102, flows into the second guide passage through the second guide holes, and finally flows out of the second opening. In order to separate waste water and raw water, the first opening and the second opening may be located on either side of the water collecting tube 1.

Preferably, said membrane element, when expanded, is provided with a third side 73 and a fourth side 74 that face each other, said third side 73 and said fourth side 74 being connected to said first side 71 and said second side 72, respectively. Said membrane element comprises an end cover that is disposed at both ends of said first membrane unit 2 and said second membrane unit 3; said end cover is penetrated by said water collecting tube 1, said first water tube 101, and said second water tube 102; said end cover seals the third side 73 and fourth side 74 of said first membrane unit 2 and said second membrane unit 3.

Further, in order to separate waste water filtered out and raw water, said membrane element further comprises a membrane shell and a sealing element. Said sealing element is disposed between an outer side wall of said end cover and an inner side wall of the membrane shell. The space between two sealing elements and the membrane shell allows communication between the waste water outlet of said first membrane unit 2 and the raw water inlet of said second membrane unit 3.

In another optional embodiment, said sealing element may be sleeved upon said first water tube 101 and said second water tube 102, thereby separating the waste water in said first water tube 101 and said second water tube 102 from the space in the membrane shell.

In another optional embodiment, said sealing element may be wrapped around said first membrane unit 2 and said second membrane unit 3, so that said sealing element forms a sealed space with said first membrane unit 2 and said second membrane unit 3 and maintains separation from the space in the membrane shell.

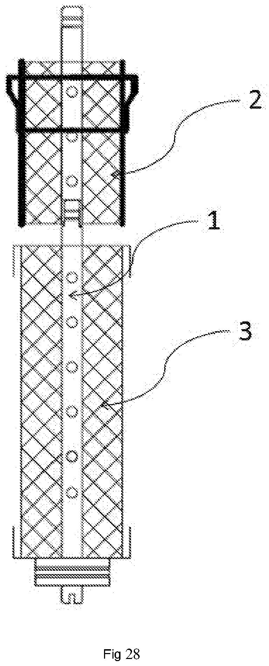

As shown in Figure 28, an embodiment of the present application further discloses a membrane element that comprises a water collecting tube 1, a first membrane unit 2 disposed on the water collecting tube 1, and a second membrane unit 3 disposed on the water collecting tube 1. Said first membrane unit 2 (blue membrane) and said second membrane unit 3 (side-flow membrane) are arranged at intervals in an axial direction of the water collecting tube 1. The raw water inlet of said first membrane unit 2 is located on the third side 73 thereof and the waste water outlet is located the fourth side 74 thereof. In other words, the raw water flow passage of said first membrane unit 2 extends in an axial direction of said water collecting tube 1. The raw water inlet of said second membrane unit 3 is located on the second side 72 thereof and the waste water outlet is located the fourth side 74 thereof. In other words, the raw water flow passage of said second membrane unit 3 extends spirally in a circumferential direction.

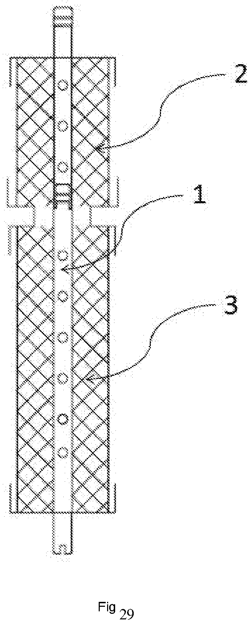

As shown in Figure 29, an embodiment of the present application further discloses a membrane element that comprises a water collecting tube 1, a first membrane unit 2 disposed on the water collecting tube 1, and a second membrane unit 3 disposed on the water collecting tube 1. Said first membrane unit 2 (side-flow membrane) and said second membrane unit 3 (side-flow membrane) are arranged at intervals in an axial direction of the water collecting tube 1. The raw water inlet of said first membrane unit 2 is located on the second side 72 thereof and the waste water outlet is located the fourth side 74 thereof. The raw water inlet of said second membrane unit 3 is located on the third side 73 thereof and the waste water outlet is located the second side 72 thereof. In other words, the raw water flow passage of said first membrane unit 2 and that of said second membrane unit 3 extend spirally in a circumferential direction. It is noteworthy that a sealing element (for example, a rubber ring) is disposed between the end cover of said first membrane unit 2 that is close to an end of said second membrane unit 3 and the membrane shell, in order to separate raw water in said first membrane unit 2 from waste water filtered out by said first membrane unit 2.

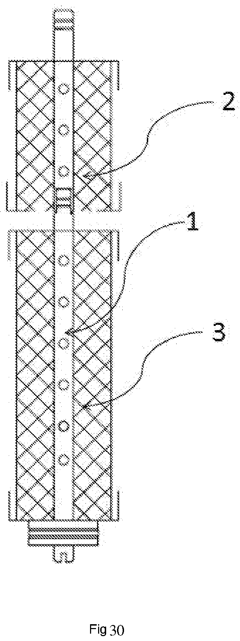

As shown in Figure 30, an embodiment of the present application further discloses a membrane element that comprises a water collecting tube 1, a first membrane unit 2 disposed on the water collecting tube 1, and a second membrane unit 3 disposed on the water collecting tube 1. Said first membrane unit 2 (side-flow membrane) and said second membrane unit 3 (side-flow membrane) are arranged at intervals in an axial direction of the water collecting tube 1. The raw water inlet of said first membrane unit 2 is located on the second side 72 thereof and the waste water outlet is located the fourth side 74 thereof. The raw water inlet of said second membrane unit 3 is located on the second side 72 thereof and the waste water outlet is located the fourth side 74 thereof. In other words, the raw water flow passage of said first membrane unit 2 and that of said second membrane unit 3 extend spirally in a circumferential direction. It is noteworthy that a sealing element (for example, a rubber ring) is disposed between the end cover of said first membrane unit 2 that is close to an end of said second membrane unit 3 and the membrane shell, in order to separate raw water in said first membrane unit 2 from waste water filtered out by said first membrane unit 2.

Embodiments of the present application further disclose a filter cartridge that comprises the above-described membrane element.

In this specification, the embodiments have been described progressively; the description of an embodiment focuses on its differences from other embodiments, and cross references can be made for the same or similar components of the embodiments.

The above-described embodiments are intended only to explain the technical ideas and characteristics of the present application, serving the purpose of enabling those of ordinary skill in the art to understand the contents of the present application and implement the present application, instead of limiting the scope of the present application. Any modifications or alterations made to the above-mentioned embodiments without departing from the spirit of the present application shall fall within the scope of the present application.

## Claims

1. A membrane element, **characterized by** comprising: at least one water collecting tube, a first membrane unit wound on said water collecting tube, and a second membrane unit wound on said water collecting tube, wherein at least one of the raw water flow passage of said first membrane unit and that of said second membrane unit extends spirally in a circumferential direction of said water collecting tube, and the waste water outlet of said first membrane unit is in communication with the raw water inlet of said second membrane unit.

2. The membrane element as claimed in claim 1, **characterized in that** when said first membrane unit and said second membrane unit are expanded, the waste water outlet of said first membrane unit and the raw water inlet of said second membrane unit are located on the same side.

3. The membrane element as claimed in claim 2, **characterized in that** the waste water outlet of said first membrane unit is located on a circumferential surface of said membrane element, and the raw water inlet of said second membrane unit is located on a circumferential surface of said membrane element.

4. The membrane element as claimed in claim 3, **characterized in that** said first membrane unit and said second membrane unit are wound on said water collecting tube together, and said membrane element, when expanded, is provided with a first side that is connected to said water collecting tube and a second side that faces said first side; the waste water outlet of said first membrane unit and the raw water inlet of said second membrane unit, when said membrane element is expanded, are located on said second side.

5. The membrane element as claimed in claim 4, **characterized in that** said membrane element, when expanded, is provided with a third side and a fourth side that face each other, said third side and said fourth side are connected to said first side and said second side, respectively, the raw water inlet of said first membrane unit is disposed on said third side that is close to said first side, and the waste water outlet of said second membrane unit is disposed on said fourth side that is close to said first side.

6. The membrane element as claimed in claim 5, **characterized in that** the part of the third side on the side of the raw water flow passage of said first membrane unit except the raw water inlet of said first membrane unit is sealed, and the fourth side on the side of the raw water flow passage of said first membrane unit is sealed; the part of the fourth side on the side of the raw water flow passage of said second membrane unit except the waste water outlet of said second membrane unit is sealed, and the third side on the side of the raw water flow passage of said second membrane unit is sealed.

7. The membrane element as claimed in claim 6, **characterized in that** said first membrane unit and said second membrane unit are stacked when said membrane element is expanded.

8. The membrane element as claimed in claim 7, **characterized in that** the third side on the side of the raw water flow passage of said first membrane unit, except the part corresponding to the raw water inlet of said first membrane unit, and the third side on the side of the raw water flow passage of said second membrane unit, except the part corresponding to the raw water inlet of said first membrane unit, are sealed by a first end cover, and a part of the third side of said second membrane unit corresponding to the raw water inlet of said first membrane unit is sealed on the surface of said second membrane unit that is close to the third side and on the side of the raw water flow passage.

9. The membrane element as claimed in claim 7, **characterized in that** the fourth side on the side of the raw water flow passage of said second membrane unit, except the part corresponding to the waste water outlet of said second membrane unit, and the fourth side on the side of the raw water flow passage of said first membrane unit, except the part corresponding to the waste water outlet of said second membrane unit, are sealed by a second end cover, and a part of the fourth side of said first membrane unit corresponding to the waste water outlet of said second membrane unit is sealed on the surface of said first membrane unit that is close to the fourth side and on the side of the raw water flow passage.

10. The membrane element as claimed in claim 6, **characterized in that** said first membrane unit and said second membrane unit are configured in parallel in an axial direction of said water collecting tube.

11. The membrane element as claimed in claim 10, **characterized in that** said first membrane unit is provided with a first end and a second end that face each other in an axial direction of said water collecting tube, and said second membrane unit is provided with a third end and a fourth end that face each other in an axial direction of said water collecting tube, wherein the second end of said first membrane unit and the third end of said second membrane unit are disposed adjacent to each other,
said membrane element comprises a first end cover, a second end cover, a third end cover, and fourth end cover, said first end cover, second end cover, third end cover and fourth end cover being correspondingly disposed at the first end and second end of said first membrane unit and disposed at the third end and fourth end of said second membrane unit;
the part of the third side on the side of the raw water flow passage of said first membrane unit except the raw water inlet of said first membrane unit is sealed by the first end cover;
the fourth side on the side of the raw water flow passage of said first membrane unit is sealed by the second end cover;
the third side on the side of the raw water flow passage of said second membrane unit is sealed by the third end cover;
the part of the fourth side on the side of the raw water flow passage of said second membrane unit except the waste water outlet of said second membrane unit is sealed by the fourth end cover.

12. The membrane element as claimed in claim 4, **characterized in that** a first water tube close to the first side of said first membrane unit is disposed in the raw water flow passage of said first membrane unit, a second water tube close to the first side of said second membrane unit is disposed in the raw water flow passage of said second membrane unit, said first water tube and said second water tube extend in an axial direction of said water collecting tube, and said first water tube comprises a plurality of second guide holes disposed on a side wall of said first water tube, a first guide passage that extends in an axial direction and is in communication with said plurality of first guide holes, and a first opening that is disposed in an end portion of said first water tube and is in communication with said first guide passage; said second water tube comprises a plurality of second guide holes disposed on a side wall of said second water tube, a second guide passage that extends in an axial direction and is in communication with said plurality of second guide holes, and a second opening that is disposed in an end portion of said second water tube and is in communication with said second guide passage.

13. The membrane element as claimed in claim 12, **characterized in that** said membrane element, when expanded, is provided with a third side and a fourth side that face each other, said third side and said fourth side are connected to said first side and said second side, respectively, said membrane element comprises an end cover that is disposed at both ends of said first membrane unit and said second membrane unit, said end cover is penetrated by said water collecting tube, said first water tube, and said second water tube, and said end cover seals the third side and fourth side of said first membrane unit and said second membrane unit.

14. The membrane element as claimed in claim 13, **characterized by** comprising a membrane shell and a sealing element, wherein said sealing element is disposed between said membrane shell and said end cover, or, said sealing element is sleeved upon said first water tube and second water tube, or, said sealing element is wrapped around said first membrane unit and said second membrane unit.

15. The membrane element as claimed in claim 3, **characterized by** comprising a membrane shell, wherein a third space that is in communication with the waste water outlet of said first membrane unit and the raw water inlet of said second membrane unit is formed between said membrane shell and an outer wall of said first membrane unit and/or said second membrane unit.

16. The membrane element as claimed in claim 1, **characterized in that** the waste water outlet of said first membrane unit and the raw water inlet of said second membrane unit are located in an end portion of at least one end of said membrane element.

17. The membrane element as claimed in claim 16, **characterized in that** said first membrane unit and said second membrane unit are stacked when said membrane element is expanded, said first membrane unit and said second membrane unit are wound on said water collecting tube together, the waste water outlet of said first membrane unit and the raw water inlet of said second membrane unit are located at one end of said membrane element, and the raw water inlet of said first membrane unit and the waste water outlet of said second membrane unit are located at the other end of said membrane element.

18. The membrane element as claimed in claim 17, **characterized in that** said membrane element, when expanded, is provided with a first side that is connected to said water collecting tube and a second side that faces said first side, said membrane element, when expanded, is further provided with a third side and a fourth side that face each other, said third side and said fourth side are connected to said first side and said second side, respectively, the waste water outlet of said first membrane unit is disposed on said fourth side that is close to said second side, the raw water inlet of said second membrane unit is disposed on said fourth side that is close to said first side, the raw water inlet of said first membrane unit is disposed on said third side that is close to said first side, and the waste water outlet of said second membrane unit is disposed on said third side that is close to said second side.

19. The membrane element as claimed in claim 18, **characterized in that** the part of the third side on the side of the raw water flow passage of said first membrane unit except the raw water inlet of said first membrane unit is sealed, and and the part of the fourth side on the side of the raw water flow passage of said first membrane unit except the waste water outlet of said first membrane unit is sealed; the part of the fourth side on the side of the raw water flow passage of said second membrane unit except the raw water inlet of said second membrane unit is sealed, the part of the third side on the side of the raw water flow passage of said second membrane unit except the waste water outlet of said second membrane unit is sealed, and the second side of said membrane element is sealed.

20. The membrane element as claimed in claim 19, **characterized in that** the third side on the side of the raw water flow passage of said first membrane unit except the part corresponding to the raw water inlet of said first membrane unit and the waste water outlet of said second membrane unit, and the third side on the side of the raw water flow passage of said second membrane unit except the part corresponding to the raw water inlet of said first membrane unit and the waste water outlet of said second membrane unit are sealed by an end cover; a part of the third side of said first membrane unit corresponding to the waste water outlet of said second membrane unit is sealed on the surface of said first membrane unit that is close to the third side and on the side of the raw water flow passage; a part of the third side of said second membrane unit corresponding to the raw water inlet of said first membrane unit is sealed on the surface of said second membrane unit that is close to the third side and on the side of the raw water flow passage.

21. The membrane element as claimed in claim 20, **characterized in that** the fourth side on the side of the raw water flow passage of said first membrane unit except the part corresponding to the waste water outlet of said first membrane unit and the raw water inlet of said second membrane unit, and the fourth side on the side of the raw water flow passage of said second membrane unit except the part corresponding to the waste water outlet of said first membrane unit and the raw water inlet of said second membrane unit are sealed by an end cover; a part of the fourth side of said first membrane unit corresponding to the raw water inlet of said second membrane unit is sealed on the surface of said first membrane unit that is close to the fourth side and on the side of the raw water flow passage; a part of the fourth side of said second membrane unit corresponding to the waste water outlet of said first membrane unit is sealed on the surface of said second membrane unit that is close to the fourth side and on the side of the raw water flow passage.

22. The membrane element as claimed in claim 17, **characterized in that** said membrane element further comprises a first end cover and a second end cover that are disposed on either end of said water collecting tube, said first end cover being provided with a first through hole that is in communication with the raw water inlet of said first membrane unit and a second through hole that is in communication with the waste water outlet of said second membrane unit, said second end cover being provided with a third through hole that is in communication with the waste water outlet of said first membrane unit and a fourth through hole that is in communication with the raw water inlet of said second membrane unit.

23. The membrane element as claimed in claim 16, **characterized in that** said water collecting tube comprises a first central tube and a second central tube that is sleeved upon said first central tube, said first membrane unit is wound on said first central tube, and said second membrane unit is wound on said second central tube; alternatively, said first membrane unit is wound on said second central tube, and said second membrane unit is wound on said first central tube.

24. The membrane element as claimed in claim 23, **characterized in that** a second pure water guide passage that is in communication with the pure water outlet of said first membrane unit or that of said second membrane unit wound on said second central tube is disposed on said second central tube, said second pure water guide passage is separated from the inner side of said second central tube, said second pure water guide passage comprises a first passage disposed on the outer surface of said second central tube and a second passage that is in communication with said first passage, and said second passage opens onto at least one end of said membrane element.

25. The membrane element as claimed in claim 24, **characterized in that** the raw water inlet of said first membrane unit is located on a circumferential surface of said first membrane unit, and the waste water outlet of said second membrane unit is located on a circumferential surface of said second membrane unit.

26. The membrane element as claimed in claim 25, **characterized in that** a first gap space is formed between an inner wall of said second central tube and an outer wall of said second membrane unit or said first membrane unit, whichever is located on the inside, said membrane element comprises a membrane shell, and a second gap space is formed between an inner wall of said membrane shell and an outer wall of said first membrane unit or said second membrane unit wound on said second central tube.

27. The membrane element as claimed in claim 1, **characterized in that** said first membrane unit and said second membrane unit are made of the same or different membrane materials.

28. The membrane element as claimed in claim 1, **characterized in that** said first membrane unit is a nanofiltration membrane and said second membrane unit is a reverse osmosis membrane.

29. The membrane element as claimed in claim 28, **characterized in that** said first membrane unit has a surface area smaller than that of said second membrane unit.

30. The membrane element as claimed in claim 1, **characterized in that** said first membrane unit and said second membrane unit are reverse osmosis membranes.

31. The membrane element as claimed in claim 30, **characterized in that** said first membrane unit has a surface area larger than that of said second membrane unit.

32. The membrane element as claimed in claim 1, **characterized in that** a plurality of first membrane units are provided, and said plurality of first membrane units are made of the same or different membrane materials.

33. The membrane element as claimed in claim 1, **characterized in that** a plurality of second membrane units are provided, and said plurality of second membrane units are made of the same or different membrane materials.

34. The membrane element as claimed in claim 1, **characterized in that** the raw water flow passage of said first membrane unit and that of said second membrane unit extend spirally in a circumferential direction of said water collecting tube.

35. The membrane element as claimed in claim 1, **characterized in that** when said first membrane unit and said second membrane unit are expanded, the waste water outlet of said first membrane unit and the raw water inlet of said second membrane unit are located on different sides.

36. The membrane element as claimed in claim 1, **characterized in that** the raw water flow passage of said first membrane unit or that of said second membrane unit extends in an axial direction of said water collecting tube.

37. A filter cartridge, **characterized by** comprising the membrane element as claimed in any one of claims 1 to 36.

38. A membrane element, **characterized by** comprising:
a water collecting tube;
and a first membrane unit and a second membrane unit that are wound on said water collecting tube together;
a waste water outlet of said first membrane unit is in communication with a raw water inlet of said second membrane unit; when said first membrane unit and said second membrane unit are expanded, said waste water outlet of said first membrane unit and said raw water inlet of said second membrane unit are located on the same side.

39. The membrane element as claimed in claim 38, **characterized in that** said first membrane unit and said second membrane unit are wound on said water collecting tube together in one step.

40. The membrane element as claimed in claim 38, **characterized in that** said first membrane unit and said second membrane unit are stacked when said membrane element is expanded.

41. The membrane element as claimed in claim 40, **characterized in that** said membrane element, when expanded, is provided with a first side that is connected to said water collecting tube and a second side that faces said first side; the waste water outlet of said first membrane unit and the raw water inlet of said second membrane unit, when said membrane element is expanded, are located on said second side.

42. The membrane element as claimed in claim 41, **characterized in that** said membrane element, when expanded, is provided with a third side and a fourth side that face each other, said third side and said fourth side are connected to said first side and said second side, respectively, the raw water inlet of said first membrane unit is disposed on said third side that is close to said first side, and the waste water outlet of said second membrane unit is disposed on said fourth side that is close to said first side.

43. The membrane element as claimed in claim 42, **characterized in that** the part of the third side on the side of the raw water flow passage of said first membrane unit except the raw water inlet of said first membrane unit is sealed, and the fourth side on the side of the raw water flow passage of said first membrane unit is sealed; the part of the fourth side on the side of the raw water flow passage of said second membrane unit except the waste water outlet of said second membrane unit is sealed, and the third side on the side of the raw water flow passage of said second membrane unit is sealed.

44. The membrane element as claimed in claim 43, **characterized in that** the third side on the side of the raw water flow passage of said first membrane unit, except the part corresponding to the raw water inlet of said first membrane unit, and the third side on the side of the raw water flow passage of said second membrane unit, except the part corresponding to the raw water inlet of said first membrane unit, are sealed by a first end cover, and a part of the third side of said second membrane unit corresponding to the raw water inlet of said first membrane unit is sealed on the surface of said second membrane unit that is close to the third side and on the side of the raw water flow passage.

45. The membrane element as claimed in claim 43, **characterized in that** the fourth side on the side of the raw water flow passage of said second membrane unit, except the part corresponding to the waste water outlet of said second membrane unit, and the fourth side on the side of the raw water flow passage of said first membrane unit, except the part corresponding to the waste water outlet of said second membrane unit, are sealed by a second end cover, and a part of the fourth side of said first membrane unit corresponding to the waste water outlet of said second membrane unit is sealed on the surface of said first membrane unit that is close to the fourth side and on the side of the raw water flow passage.

46. The membrane element as claimed in claim 40, **characterized in that** the waste water outlet of said first membrane unit and the raw water inlet of said second membrane unit are located at one end of said membrane element, and the raw water inlet of said first membrane unit and the waste water outlet of said second membrane unit are located at the other end of said membrane element.

47. The membrane element as claimed in claim 46, **characterized in that** said membrane element, when expanded, is provided with a first side that is connected to said water collecting tube and a second side that faces said first side, said membrane element, when expanded, is further provided with a third side and a fourth side that face each other, said third side and said fourth side are connected to said first side and said second side, respectively, the waste water outlet of said first membrane unit is disposed on said fourth side that is close to said second side, the raw water inlet of said second membrane unit is disposed on said fourth side that is close to said first side, the raw water inlet of said first membrane unit is disposed on said third side that is close to said first side, and the waste water outlet of said second membrane unit is disposed on said third side that is close to said second side.

48. The membrane element as claimed in claim 47, **characterized in that** the part of the third side on the side of the raw water flow passage of said first membrane unit except the raw water inlet of said first membrane unit is sealed, and the part of the fourth side on the side of the raw water flow passage of said first membrane unit except the waste water outlet of said first membrane unit is sealed; the part of the fourth side on the side of the raw water flow passage of said second membrane unit except the raw water inlet of said second membrane unit is sealed, the part of the third side on the side of the raw water flow passage of said second membrane unit except the waste water outlet of said second membrane unit is sealed, and the second side of said membrane element is sealed.

49. The membrane element as claimed in claim 48, **characterized in that** the third side on the side of the raw water flow passage of said first membrane unit except the part corresponding to the raw water inlet of said first membrane unit and the waste water outlet of said second membrane unit, and the third side on the side of the raw water flow passage of said second membrane unit except the part corresponding to the raw water inlet of said first membrane unit and the waste water outlet of said second membrane unit are sealed by an end cover; a part of the third side of said first membrane unit corresponding to the waste water outlet of said second membrane unit is sealed on the surface of said first membrane unit that is close to the third side and on the side of the raw water flow passage; a part of the third side of said second membrane unit corresponding to the raw water inlet of said first membrane unit is sealed on the surface of said second membrane unit that is close to the third side and on the side of the raw water flow passage.

50. The membrane element as claimed in claim 48, **characterized in that** the fourth side on the side of the raw water flow passage of said first membrane unit except the part corresponding to the waste water outlet of said first membrane unit and the raw water inlet of said second membrane unit, and the fourth side on the side of the raw water flow passage of said second membrane unit except the part corresponding to the waste water outlet of said first membrane unit and the raw water inlet of said second membrane unit are sealed by an end cover; a part of the fourth side of said first membrane unit corresponding to the raw water inlet of said second membrane unit is sealed on the surface of said first membrane unit that is close to the fourth side and on the side of the raw water flow passage; a part of the fourth side of said second membrane unit corresponding to the waste water outlet of said first membrane unit is sealed on the surface of said second membrane unit that is close to the fourth side and on the side of the raw water flow passage.

51. The membrane element as claimed in claim 46, **characterized in that** said membrane element further comprises a first end cover and a second end cover that are disposed on either end of said water collecting tube, said first end cover being provided with a first opening that is in communication with the raw water inlet of said first membrane unit and a second opening that is in communication with the waste water outlet of said second membrane unit, said second end cover being provided with a third through hole that is in communication with the waste water outlet of said first membrane unit and a fourth through hole that is in communication with the raw water inlet of said second membrane unit.

52. The membrane element as claimed in claim 38, **characterized in that** said first membrane unit and said second membrane unit are configured in parallel in an axial direction of said water collecting tube, and said membrane element, when expanded, is provided with a first side that is connected to said water collecting tube and a second side that faces said first side; the waste water outlet of said first membrane unit and the raw water inlet of said second membrane unit, when said membrane element is expanded, are located on said second side, said membrane element, when expanded, is provided with a third side and a fourth side that face each other, said third side and said fourth side are connected to said first side and said second side, respectively, the raw water inlet of said first membrane unit is disposed on said third side that is close to said first side, and the waste water outlet of said second membrane unit is disposed on said fourth side that is close to said first side.

53. The membrane element as claimed in claim 52, **characterized in that** said first membrane unit is provided with a first end and a second end that face each other in an axial direction of said water collecting tube, and said second membrane unit is provided with a third end and a fourth end that face each other in an axial direction of said water collecting tube, wherein the second end of said first membrane unit and the third end of said second membrane unit are disposed facing each other,
said membrane element comprises a first end cover, a second end cover, a third end cover, and fourth end cover, said first end cover, second end cover, third end cover and fourth end cover being correspondingly disposed at the first end and second end of said first membrane unit and disposed at the third end and fourth end of said second membrane unit;
the part of the third side on the side of the raw water flow passage of said first membrane unit except the raw water inlet of said first membrane unit is sealed by the first end cover;
the fourth side on the side of the raw water flow passage of said first membrane unit is sealed by the second end cover;
the third side on the side of the raw water flow passage of said second membrane unit is sealed by the third end cover;
the part of the fourth side on the side of the raw water flow passage of said second membrane unit except the waste water outlet of said second membrane unit is sealed by the fourth end cover.

54. The membrane element as claimed in claim 38, **characterized in that** said membrane element, when expanded, is provided with a first side that is connected to said water collecting tube and a second side that faces said first side; the waste water outlet of said first membrane unit and the raw water inlet of said second membrane unit, when said membrane element is expanded, are located on said second side, said membrane element comprises a membrane shell, and a third space is formed between said membrane shell and an outer wall of said first membrane unit and/or said second membrane unit.

55. The membrane element as claimed in claim 38, **characterized in that** said first membrane unit and said second membrane unit are made of the same or different filter membrane materials.

56. The membrane element as claimed in claim 38, **characterized in that** said first membrane unit is a nanofiltration membrane and said second membrane unit is a reverse osmosis membrane.

57. The membrane element as claimed in claim 56, **characterized in that** said first membrane unit has a surface area smaller than that of said second membrane unit.

58. The membrane element as claimed in claim 38, **characterized in that** said first membrane unit and said second membrane unit are reverse osmosis membranes.

59. The membrane element as claimed in claim 58, **characterized in that** said first membrane unit has a surface area larger than that of said second membrane unit.

60. The membrane element as claimed in claim 38, **characterized in that** a plurality of first membrane units are provided, and said plurality of first membrane units are made of the same or different filter membrane materials.

61. The membrane element as claimed in claim 38, **characterized in that** a plurality of second membrane units are provided, and said plurality of second membrane units are made of the same or different filter membrane materials.

62. The membrane element as claimed in claim 38, **characterized in that** the raw water flow passage of said first membrane unit and that of said second membrane unit extend spirally in a circumferential direction of said water collecting tube.

63. A filter cartridge, **characterized by** comprising the membrane element as claimed in any one of claims 38 to 62.
